(19) **Europäisches Patentamt** / **European Patent Office** / **Office européen des brevets**

(11) **EP 4 518 220 A1**

(12) **EUROPEAN PATENT APPLICATION**
published in accordance with Art. 153(4) EPC

(43) Date of publication:
**05.03.2025 Bulletin 2025/10**

(21) Application number: **23795083.7**

(22) Date of filing: **17.04.2023**

(51) International Patent Classification (IPC):
**H04L 5/00** (2006.01)

(52) Cooperative Patent Classification (CPC):
**H04L 5/00; H04W 72/23**

(86) International application number:
**PCT/CN2023/088620**

(87) International publication number:
**WO 2023/207650 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.04.2022 CN 202210435803**

(71) Applicant: **Huawei Technologies Co., Ltd.**
**Shenzhen, Guangdong 518129 (CN)**

(72) Inventors:
• **GAO, Xiang**
  **Shenzhen, Guangdong 518129 (CN)**
• **DONG, Changzhao**
  **Shenzhen, Guangdong 518129 (CN)**
• **LIU, Kunpeng**
  **Shenzhen, Guangdong 518129 (CN)**

(74) Representative: **Roth, Sebastian**
**Mitscherlich PartmbB**
**Patent- und Rechtsanwälte**
**Karlstraße 7**
**80333 München (DE)**

(54) **COMMUNICATION METHOD AND APPARATUS**

(57) This application relates to the field of communication technologies, and discloses a communication method and apparatus. The method includes: an access network device sends first indication information to a terminal device, and sends second indication information to the terminal device. When the second indication information indicates a first value, the first indication information indicates a first port index group in a plurality of port index groups included in a first set. When the second indication information indicates a second value, the first indication information indicates a second port index group in a plurality of port index groups included in a second set. The first port index group and the second port index group have an association relationship. According to the foregoing method, by establishing the association relationship between the first port index group and the second port index group, for different values indicated by the second indication information, a port index group indicated by the first indication information may be interpreted differently. Therefore, after port expansion, indication overheads can be effectively reduced while a port allocated to the terminal device is indicated.

FIG. 6

**Description**

**CROSS-REFERENCE TO RELATED APPLICATIONS**

This application claims priority to Chinese Patent Application No. 202210435803.4, filed with the China National Intellectual Property Administration on April 24, 2022 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

A demodulation reference signal (demodulation reference signal, DMRS) may be used to estimate an equivalent channel of a data channel or a control channel. The data channel may be, for example, a physical uplink shared channel (physical uplink shared channel, PUSCH) or a physical downlink shared channel (physical downlink shared channel, PDSCH), and the control channel may be, for example, a physical downlink control channel (physical downlink control channel, PDCCH).

Downlink data transmission is used as an example. When sending data to a terminal device through the PDSCH, an access network device may perform precoding on the data based on downlink channel state information (channel state information, CSI). Further, the access network device may allocate a DMRS port to the terminal device, and send a DMRS to the terminal device through the PDSCH on a time-frequency resource corresponding to the DMRS port. Identical signal processing such as precoding is usually performed on the DMRS and the data. In this way, after receiving the DMRS corresponding to the DMRS port, the terminal device may obtain estimation on an equivalent channel according to a channel estimation algorithm, and then complete data demodulation based on the equivalent channel.

However, after DMRS port expansion, how the access network device indicates, to the terminal device, the DMRS port allocated to the terminal device still needs to be further studied.

**SUMMARY**

This application provides a communication method and apparatus, to indicate, to a terminal device after port expansion, a port allocated to the terminal device.

According to a first aspect, an embodiment of this application provides a communication method. The method may be applied to an access network device or a module (for example, a chip) in the access network device. For example, the method is applied to the access network device. In the method, the access network device may send first indication information to a terminal device, and send second indication information to the terminal device. When the second indication information indicates a first value, the first indication information indicates a first port index group in a plurality of port index groups included in a first set. When the second indication information indicates a second value, the first indication information indicates a second port index group in a plurality of port index groups included in a second set. The first port index group and the second port index group have an association relationship.

According to the foregoing solution, by establishing the association relationship between the first port index group and the second port index group, for different values indicated by the second indication information, a DMRS port index group indicated by the first indication information is interpreted differently. Therefore, after port expansion, indication overheads can be effectively reduced while a port allocated to the terminal device is indicated.

In a possible design, the association relationship is: there is a one-to-one correspondence between port indexes in the first port index group and port indexes in the second port index group.

For example, port indexes in the plurality of port index groups included in the first set are all existing DMRS port indexes, and port indexes in the plurality of port index groups included in the second set are all newly added DMRS port indexes. When the second indication information indicates the first value, the first port index group indicated by the first indication information includes an existing DMRS port index, and when the second indication information indicates the second value, the second port index group indicated by the first indication information includes a newly added DMRS port index, so that the access network device may not allocate an existing DMRS port and a newly added DMRS port to the terminal device at the same time, to better ensure channel estimation performance.

In a possible design, there is an offset between a port index in the first port index group and a port index in the second port index group.

In a possible design, the first set corresponds to a plurality of port indexes, each of the plurality of port index groups included in the first set includes at least one of the plurality of port indexes, and the offset is equal to a quantity of port indexes corresponding to the first set.

The quantity of port indexes corresponding to the first set may be different from a quantity of port index groups included in the first set. For example, the port indexes corresponding to the first set include DMRS port indexes "0 to 3" (that is, a quantity of port indexes corresponding to the first set is 4). In this case, the first set may include 12 port index groups. For details, refer to Table 3A.

In a possible design, a value of the offset is 4, 8, 6, or 12.

In a possible design, the association relationship is: the first port index group is a subset of the second port index group.

In a possible design, the second port index group includes a port index in the first port index group, and further includes a port index corresponding to the port index in the first port index group. The first port index group includes a first port index, and there is an offset between a port index corresponding to the first port index and the first port index.

In a possible design, the second indication information is carried in a radio resource control RRC message or downlink control information DCI.

In a possible design, the first indication information indicates a first index value, and the first index value is associated with the first port index group and the second port index group.

In a possible design, the first port index group and the second port index group correspond to a same time-frequency resource, the first port index group corresponds to a first cover code sequence, the second port index group corresponds to a second cover code sequence, and the first cover code sequence is orthogonal to the second cover code sequence.

In a possible design, the method further includes: sending third indication information to the terminal device; and when the first indication information indicates the first port index group, the third indication information indicates whether the second port index group is allocated to another terminal device on a time-frequency resource allocated to the terminal device; or when the first indication information indicates the second port index group, the third indication information indicates whether the first port index group is allocated to the another terminal device on the time-frequency resource allocated to the terminal device.

According to the foregoing solution, the access network device may send the third indication information to the terminal device, so that the terminal device can perform channel estimation in a corresponding manner based on the third indication information. For example, when the third indication information indicates that the second port index group (or the first port index group) is not allocated to the another terminal device on the time-frequency resource allocated to the terminal device, the terminal device may not consider despreading of an outer cover code during channel estimation based on the third indication information, so that channel estimation is more conveniently implemented. For another example, when the third indication information indicates that the second port index group (or the first port index group) is allocated to the another terminal device on the time-frequency resource allocated to the terminal device, the terminal device may consider despreading of an inner cover code and the outer cover code during channel estimation based on the third indication information, to reduce interference between an existing DMRS port and a newly added DMRS port.

According to a second aspect, an embodiment of this application provides a communication method. The method may be applied to a terminal device or a module (such as a chip) in the terminal device. For example, the method is applied to the terminal device. In the method, the terminal device may receive first indication information from an access network device, and receive second indication information from the access network device. When the second indication information indicates a first value, the first indication information indicates a first port index group in a plurality of port index groups included in a first set. When the second indication information indicates a second value, the first indication information indicates a second port index group in a plurality of port index groups included in a second set. The first port index group and the second port index group have an association relationship.

In a possible design, the association relationship is: there is a one-to-one correspondence between port indexes in the first port index group and port indexes in the second port index group.

In a possible design, there is an offset between a port index in the first port index group and a port index in the second port index group.

In a possible design, the first set corresponds to a plurality of port indexes, each of the plurality of port index groups included in the first set includes at least one of the plurality of port indexes, and the offset is equal to a quantity of port indexes corresponding to the first set.

In a possible design, a value of the offset is 4, 8, 6, or 12.

In a possible design, the association relationship is: the first port index group is a subset of the second port index group.

In a possible design, the second port index group includes a port index in the first port index group, and further includes a port index corresponding to the port index in the first port index group.

The first port index group includes a first port index, and there is an offset between a port index corresponding to the first port index and the first port index.

In a possible design, the second indication information is carried in an RRC message or DCI.

In a possible design, the first indication information indicates a first index value, and the first index value is associated with the first port index group and the second port index group.

In a possible design, the first port index group and the second port index group correspond to a same time-frequency resource, the first port index group corresponds to a first cover code sequence, the second port index group corresponds to a second cover code sequence, and the first cover code sequence is orthogonal to the second cover code sequence.

In a possible design, the method further includes: receiving third indication information from the access network device; and when the first indication information indicates the first port index group, the third indication information indicates whether the second port index group is allocated to another terminal device on a time-frequency resource allocated to the terminal device; or when the first indication information indicates the second port index group, the third indication information indicates whether the first port index group is allocated to the another terminal device on the time-frequency resource allocated to the terminal device.

It may be understood that the method in the second aspect corresponds to the method in the first aspect. For beneficial effects of related technical features, refer to the descriptions in the first aspect. Details are not described again.

According to a third aspect, this application provides a communication apparatus. The communication apparatus has a function for implementing the first aspect. For example, the communication apparatus includes a corresponding module, unit, or means (means) for performing an operation in the first aspect. The module, unit, or means may be implemented by software, or implemented by hardware, or implemented by hardware executing corresponding software.

In a possible design, the communication apparatus includes a processing unit and a communication unit. The communication unit may be configured to receive/send a signal, to implement communication between the communication apparatus and another apparatus. The processing unit may be configured to perform some internal operations of the communication apparatus. Functions performed by the processing unit and the communication unit may correspond to the operations in the first aspect.

In a possible design, the communication apparatus includes a processor, and the processor may be coupled to a memory. The memory may store a computer program or instructions necessary for implementing the functions in the first aspect. The processor may execute the computer program or instructions stored in the memory. When the computer program or instructions are executed, the communication apparatus is enabled to implement the method according to any one of the possible designs or implementations of the first aspect.

In a possible design, the communication apparatus includes a processor and a memory. The memory may store a computer program or instructions necessary for implementing the functions in the first aspect. The processor may execute the computer program or instructions stored in the memory. When the computer program or instructions are executed, the communication apparatus is enabled to implement the method according to any one of the possible designs or implementations of the first aspect.

In a possible design, the communication apparatus includes a processor and an interface circuit, and the processor is configured to: communicate with another apparatus through the interface circuit, and perform the method according to any one of the possible designs or implementations of the first aspect.

According to a fourth aspect, this application provides a communication apparatus. The communication apparatus has a function for implementing the second aspect. For example, the communication apparatus includes a corresponding module, unit, or means for performing an operation in the second aspect, and the function, unit, or means may be implemented by software, or implemented by hardware, or implemented by hardware executing corresponding software.

In a possible design, the communication apparatus includes a processing unit and a communication unit. The communication unit may be configured to receive/send a signal, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to the operations in the second aspect.

In a possible design, the communication apparatus includes a processor, and the processor may be coupled to a memory. The memory may store a computer program or instructions necessary for implementing the functions in the second aspect. The processor may execute the computer program or instructions stored in the memory. When the computer program or instructions are executed, the communication apparatus is enabled to implement the method in any possible design or implementation of the second aspect.

In a possible design, the communication apparatus includes a processor and a memory. The memory may store a computer program or instructions necessary for implementing the functions in the second aspect. The processor may execute the computer program or instructions stored in the memory. When the computer program or instructions are executed, the communication apparatus is enabled to implement the method in any possible design or implementation of the second aspect.

In a possible design, the communication apparatus includes a processor and an interface circuit, and the processor is configured to: communicate with another apparatus through the interface circuit, and perform the method according to any one of the possible designs or implementations of the second aspect.

It may be understood that in the third aspect or the fourth aspect, the processor may be implemented by hardware or software. When the processor is implemented by hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fifth aspect, this application provides a communication system. The communication system may include the communication apparatus according to the third aspect and the communication apparatus according to the fourth aspect.

According to a sixth aspect, this application provides a computer-readable storage medium. The computer storage medium stores computer-readable instructions. When a computer reads and executes the computer-readable instructions, the computer is enabled to perform the method according to any one of the first aspect and the possible designs of the first aspect or any one of the second aspect and the possible designs of the second aspect.

According to a seventh aspect, this application provides a computer program product. When a computer reads and executes the computer program product, the computer is enabled to perform the method according to any one of the first aspect and the possible designs of the first aspect or any one of the second aspect and the possible designs of the second aspect.

According to an eighth aspect, this application provides a chip. The chip includes a processor. The processor is coupled to a memory to read and execute a software program stored in the memory, to implement the method according to any one of the first aspect and the possible designs of the first aspect or any one of the second aspect and the possible designs of the second aspect.

## BRIEF DESCRIPTION OF DRAWINGS

FIG. 1 is a diagram of a network architecture to which an embodiment of this application is applicable;
FIG. 2 is a diagram of DMRS resource mapping according to an embodiment of this application;
FIG. 3 is a schematic flowchart corresponding to a DMRS port indication method according to an embodiment of this application;
FIG. 4 is a diagram of DMRS port expansion according to an embodiment of this application;
FIG. 5 is another diagram of DMRS port expansion according to an embodiment of this application;
FIG. 6 is a schematic flowchart corresponding to a communication method according to an embodiment of this application;
FIG. 7 is a block diagram of a possible example of an apparatus according to an embodiment of this application;
FIG. 8 is a diagram of a structure of an access network device according to an embodiment of this application; and
FIG. 9 is a diagram of a structure of a terminal device according to an embodiment of this application.

## DESCRIPTION OF EMBODIMENTS

The following describes the technical solutions in embodiments of this application with reference to the accompanying drawings in embodiments of this application.

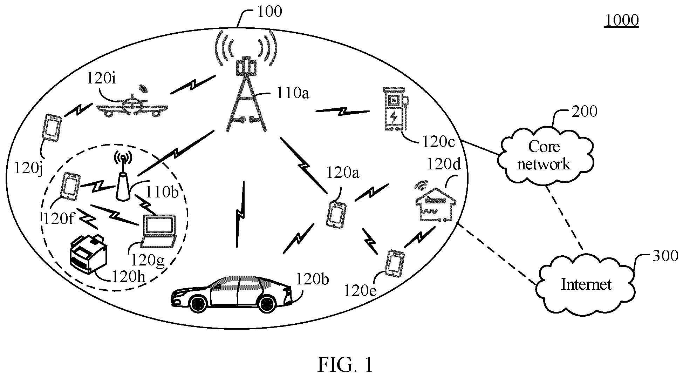

FIG. 1 is a diagram of an architecture of a communication system to which an embodiment of this application is applied. As shown in FIG. 1, a communication system 1000 includes a radio access network 100 and a core network 200. Optionally, the communication system 1000 may further include an internet 300. The radio access network 100 may include at least one radio access network device, for example, 110a and 110b in FIG. 1, and may further include at least one terminal device, for example, 120a to 120j in FIG. 1. Here, 110a is a base station, 110b is a micro base station, 120a, 120e, 120f, and 120j are mobile phones, 120b is a vehicle, 120c is a fuel dispenser, 120d is a home access node (home access point, HAP) deployed indoors or outdoors, 120g is a notebook computer, 120h is a printer, and 120i is an uncrewed aerial vehicle.

In FIG. 1, a terminal device may be connected to a radio access network device, and the radio access network device may be connected to a core network device in a core network. The core network device and the radio access network device may be different standalone physical devices, or functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. FIG. 1 is merely a diagram. The communication system may further include another device, for example, a wireless relay device and a wireless backhaul device, which are not drawn in FIG. 1.

The following describes a radio access network device and a terminal device.

(1) Radio access network device

The radio access network device may also be referred to as an access network device. The access network device may be a base station, an evolved NodeB (evolved NodeB, eNodeB), a transmission reception point (transmission reception point, TRP), a next generation NodeB (next generation NodeB, gNB) in a 5th generation (5th generation, 5G) mobile communication system, a base station in a 6th generation (6th generation, 6G) mobile communication system, a base station in a future mobile communication system, an access node in a wireless fidelity (wireless fidelity, Wi-Fi) system, or the like. The access network device may alternatively be a module or unit that completes some functions of a base station, for example, may be a central unit (central unit, CU), or may be a distributed unit (distributed unit, DU). The access network device may be a macro base station (for example, 110a in FIG. 1), or may be a micro base station or an indoor base station (for example, 110b in FIG. 1), or may be a relay node, a donor node, or the like. A specific technology and a specific device form used by the access network device are not limited in embodiments of this application.

In embodiments of this application, an apparatus configured to implement the function of the access network device may be the access network device, or may be an apparatus that can support the access network device in implementing the function, for example, a chip system. The apparatus may be installed in the access network device. The chip system may include a chip, or may include a chip and another discrete device. In the technical solutions provided in embodiments of this application, the technical solutions provided in embodiments of this application are described by using an example in which the apparatus configured to implement the function of the access network device is the access network device.

(2) Terminal device

The terminal device may also be referred to as a terminal, user equipment (user equipment, UE), a mobile station, a mobile terminal, or the like. The terminal device may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form used by the terminal device are not limited in embodiments of this application.

In embodiments of this application, an apparatus configured to implement the function of the terminal device may be a terminal device, or may be an apparatus that can support the terminal device in implementing the function, for example, a chip system. The apparatus may be installed in the terminal device. The technical solutions provided in embodiments of this application are described by using an example in which the apparatus configured to implement the function of the terminal device is the terminal device.

In addition, a same terminal device or access network device may provide different functions in different application scenarios. For example, the mobile phones in FIG. 1 include 120a, 120e, 120f, and 120j. The mobile phone 120a may access the base station 110a, connect to the vehicle 120b, directly communicate with the mobile phone 120e, and access the HAP. The mobile phone 120e may access the HAP and directly communicate with the mobile phone 120a. The mobile phone 120f may access the micro base station 110b, connect to the notebook computer 120g, and connect to the printer 120h. The mobile phone 120j may control the uncrewed aerial vehicle 120i.

Roles of the access network device and the terminal device may be relative. For example, the helicopter or the unmanned aerial vehicle 120i in FIG. 1 may be configured as a mobile base station. For the terminal device 120j that accesses the radio access network 100 through the 120i, the terminal device 120i is a base station. However, for the base station 110a, 120i is a terminal device. In other words, 110a communicates with 120i through a wireless air interface protocol. Certainly, communication between 110a and 120i may alternatively be performed based on an interface protocol between base stations. In this case, for 110a, 120i is also a base station. Therefore, both the radio access network device and the terminal device may be collectively referred to as communication apparatuses, 110a and 110b in FIG. 1 may be referred to as communication apparatuses having a base station function, and 120a to 120j in FIG. 1 may be referred to as communication apparatuses having a terminal device function.

The access network device and the terminal device may be located in fixed positions, or may be movable. The access network device and the terminal device may be deployed on the land, including an indoor or outdoor scenario, and a handheld or a vehicle-mounted scenario; or may be deployed on a water surface; or may be deployed on a plane, a balloon, or a man-made satellite in the air. Application scenarios of the access network device and the terminal device are not limited in embodiments of this application.

Communication between an access network device and a terminal device, between access network devices, or between terminal devices may be performed by using a licensed spectrum, an unlicensed spectrum, or both a licensed spectrum and an unlicensed spectrum, and may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

The communication system shown in FIG. 1 may support various radio access technologies (radio access technologies, RATs). For example, the communication system shown in FIG. 1 may be a 4th generation (4th generation, 4G) communication system (which may also be referred to as a long term evolution (long term evolution, LTE) communication system), a 5G communication system (which may also be referred to as a new radio (new radio, NR) communication system), or a future-oriented evolved system. A communication system and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the communication system evolves and a new service scenario emerges.

The following first describes related technical features in embodiments of this application. It should be noted that these explanations are intended to facilitate understanding of embodiments of this application, but should not be considered as a limitation on the protection scope claimed in this application.

## 1. DMRS

In the communication system shown in FIG. 1, an access network device may send control information to a terminal device through a control channel (for example, a PDCCH), to allocate a transmission parameter of a data channel to the terminal device. The data channel may be, for example, a PDSCH or a PUSCH. For example, the control information may indicate a time domain symbol and/or a frequency domain resource block (resource block, RB) to which the data channel is mapped, so that the access network device and the terminal device can transmit downlink data (for example, data carried on the PDSCH) and/or uplink data (for example, data carried on the PUSCH) on the allocated time-frequency resources through the data channel. In embodiments of this application, a time domain symbol may be an orthogonal frequency division multiplexing (orthogonal frequency division multiplexing, OFDM) symbol, or a discrete Fourier transform spread spectrum OFDM (discrete Fourier transform-spread-OFDM, DFT-s-OFDM) symbol.

Further, the control channel (for example, the PDCCH) or the data channel (for example, the PDSCH or the PUSCH) may carry a reference signal, for example, a demodulation reference signal (demodulation reference signal, DMRS). The data channel is used as an example. The DMRS may be used to estimate an equivalent channel of a data signal carried on the data channel, to detect and demodulate data on the data channel. Identical signal processing such as precoding is usually performed on the DMRS and the data, to ensure that the DMRS and the data pass through a same equivalent channel.

It is assumed that a transmit end sends a DMRS vector s, and sends a data signal (or referred to as a data symbol) vector x, same precoding (for example, multiplying by a same precoding matrix P) is performed on the DMRS and the data, and a precoded data signal and DMRS are simultaneously transmitted and pass through a same channel. Corresponding received signal vectors of a receive end may be represented as:

Data:

$$y = HPx + n = \tilde{H}x + n;$$

and

DMRS:

$$r = HPs + n = \tilde{H}s + n.$$

*y* represents a data signal vector received by the receive end, *r* represents a DMRS vector received by the receive end, $H$ represents a channel through which the data signal and the DMRS actually pass, $P$ represents a precoding matrix, and $n$ represents a noise signal vector.

Because both the data and the DMRS pass through an equivalent channel $\tilde{H}$, the receive end may obtain, based on a known DMRS vector $s$ and according to a channel estimation algorithm, estimation of the equivalent channel, where the DMRS vector includes DMRS symbols corresponding to a plurality of DMRS ports. Further, the receive end may complete data detection and demodulation based on the equivalent channel. The channel estimation algorithm may be, for example, a least square (least square, LS) channel estimation algorithm, a minimum mean square error (minimum mean square error, MMSE) channel estimation algorithm, or a delay domain channel estimation algorithm based on discrete Fourier transform (discrete Fourier transform, DFT)/inverse discrete Fourier transform (inverse DFT, IDFT).

## 2. DMRS port

The port may be an antenna port (antenna port), and the port may be understood as a transmit antenna identified by a receive end, or a transmit antenna that can be distinguished in space. One port may be configured for each virtual antenna, and each virtual antenna may be a weighted combination of a plurality of physical antennas. A port used to send a reference signal may be referred to as a reference signal port. The reference signal may be, for example, a DMRS, a channel state information reference signal (channel state information reference signal, CSI-RS), or a sounding reference signal (sounding reference signal, SRS). This is not specifically limited.

A DMRS port is used as an example. Different DMRS ports may be distinguished by using different indexes (or port numbers). For example, an index of a DMRS port may be 1000+X, and a value of X may be an integer greater than or equal to 0. 1000+X may also be denoted as X. When the index of the DMRS port may be 1000+X, the DMRS port may be referred to as a DMRS port 1000+X, or may be referred to as a DMRS port X. In other words, in embodiments of this application, 1000+X and X may be understood as indexes of a same DMRS port.

The following provides descriptions by using an example in which a port is a DMRS port. It may be understood that, in addition to the DMRS port, the method provided in embodiments of this application is also applicable to another possible reference signal port, for example, a CSI-RS port or an SRS port.

## 3. Time-frequency resource mapping of a DMRS port

One DMRS port may correspond to one or more DMRS signal symbols (which may also be referred to as a DMRS modulation symbol, or referred to as a DMRS symbol for short). To perform channel estimation on different time-frequency resources, a plurality of DMRS symbols corresponding to the DMRS port may be sent on the plurality of time-frequency resources. In addition, to ensure channel estimation quality, different DMRS ports are usually orthogonal ports, to avoid interference between the different DMRS ports.

A plurality of DMRS symbols corresponding to one DMRS port may correspond to one DMRS sequence, and one DMRS sequence includes a plurality of DMRS sequence elements. A DMRS sequence corresponding to one DMRS port may be mapped to a corresponding time-frequency resource according to a time-frequency resource mapping rule after being multiplied by a corresponding cover code sequence. For example, an $m^{th}$ DMRS sequence element $r(m)$ in a DMRS sequence corresponding to a DMRS port $p$ may be mapped, according to the time-frequency resource mapping rule, to a resource element (resource element, RE) whose index is $(k,l)_{p,\mu}$. The RE whose index is $(k,l)_{p,\mu}$ may correspond to a time domain symbol whose index is $l$ in a slot in time domain, and correspond to a subcarrier whose index is $k$ in frequency domain. The time-frequency resource mapping rule may satisfy the following formula 1:

$$a_{k,l}^{(p,\mu)} = \beta_{PDSCH}^{DMRS} w_{\mathrm{f}}\left(k'\right) w_{\mathrm{t}}\left(l'\right) r\left(2n+k'\right)$$

$$k = \begin{cases} 4n+2k'+\Delta & Type1 \\ 6n+k'+\Delta & Type2 \end{cases};$$

$$k' = 0,1;$$

$$l = \overline{l} + l';$$

$$n = 0,1,...;$$

$$l' = 0, 1;$$

$p$ is the index of the DMRS port, $\mu$ is a subcarrier spacing parameter, $a_{k,l}^{(p,\mu)}$ is a DMRS symbol corresponding to the DMRS port $p$ mapped to the RE whose index is $(k,l)_{p,\mu}$, $\beta_{PDSCH}^{DMRS}$ is a power scaling factor or a power control factor, $w_\text{t}$($l'$) is a time domain cover code sequence element corresponding to a time domain symbol whose index is $l'$, $w_\text{f}(k')$ is a frequency domain cover code sequence element corresponding to a subcarrier whose index is $k'$, $m = 2n + k'$, $\Delta$ is a subcarrier offset factor, and $\bar{l}$ is a symbol index of a start time domain symbol occupied by the DMRS symbol or a symbol index of a reference time domain symbol.

Further, values of $w_\text{f}(k')$, $w_\text{t}(l')$, and $\Delta$ corresponding to the DMRS port $p$ are related to a DMRS configuration type. For details, refer to descriptions about the DMRS configuration type.

## 4. DMRS configuration type

The DMRS configuration type may include a configuration type 1 (type 1) and a configuration type 2 (type 2). Different configuration types support different quantities of orthogonal DMRS ports and different time-frequency resource mapping rules. The following separately describes the configuration type 1 and the configuration type 2.

### (1) Configuration type 1

For the configuration type 1, values of $w_\text{f}(k')$, $w_\text{t}(l')$, and $\Delta$ corresponding to the DMRS port $p$ may be determined according to Table 1 below.

**Table 1: Parameter values corresponding to different DMRS ports (type 1)**

| $p$ | $\lambda$ | $\Delta$ | $w_\text{f}(k')$ | | $w_\text{t}(l')$ | |
|------|------|------|------|------|------|------|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

$\lambda$ is an index of a code division multiplexing (code divide multiplexing, CDM) group (which may also be referred to as an orthogonal multiplexing group) to which the DMRS port $p$ belongs, and time-frequency resources occupied by DMRS ports in a same CDM group are the same. The "time-frequency resources occupied by the DMRS ports" may also be replaced with "time-frequency resources corresponding to the DMRS ports" or "time-frequency resources to which the DMRS ports are mapped".

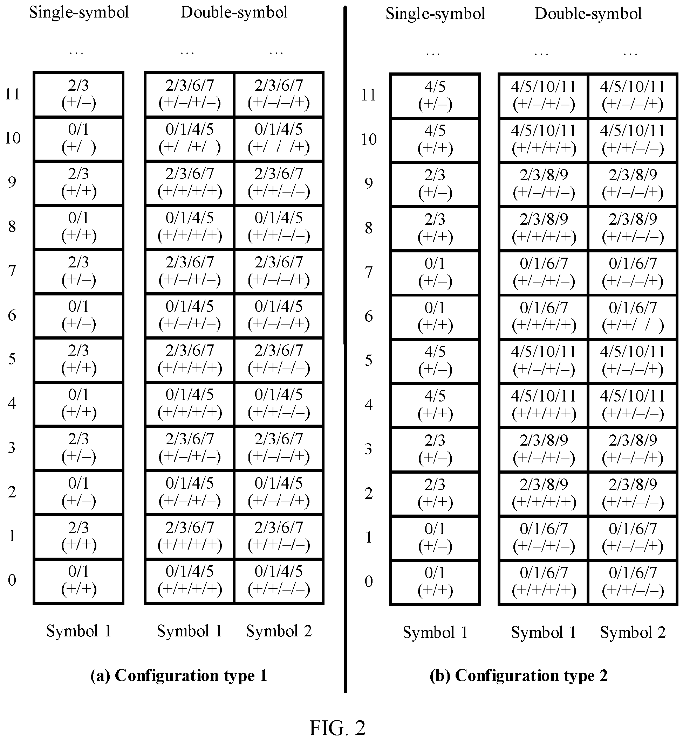

Time-frequency resources to which DMRS sequences corresponding to different DMRS ports are mapped may be determined based on the foregoing time-frequency resource mapping rule (that is, the formula 1) and values of parameters in Table 1, as shown in (a) in FIG. 2. A time domain symbol length occupied by a DMRS port (or a quantity of time domain symbols occupied by the DMRS port) may be 1 or 2. When the time domain symbol length occupied by the DMRS port is 1, a DMRS may be referred to as a single-symbol DMRS. When the time domain symbol length occupied by the DMRS port is 2, a DMRS may be referred to as a double-symbol DMRS. The following separately describes the single-symbol DMRS and the double-symbol DMRS.

### (1.1) Single-symbol DMRS

A single-symbol DMRS (corresponding to $l'$=0) supports a maximum of four orthogonal DMRS ports. The four orthogonal DMRS ports may be divided into two CDM groups: a CDM group 0 and a CDM group 1. The CDM group 0 includes a DMRS port 0 and a DMRS port 1, and the CDM group 1 includes a DMRS port 2 and a DMRS port 3. The CDM group 0 and the CDM group 1 are frequency division multiplexed (mapped to different frequency domain resources). DMRS ports included in a CDM group are mapped to a same time-frequency resource. DMRS sequences corresponding to the DMRS ports included in the CDM group are distinguished by using cover code sequences, to ensure orthogonality of the DMRS ports in the CDM group, and suppress interference between DMRSs transmitted on different DMRS ports. The cover code sequence may be an orthogonal cover code (orthogonal cover code, OCC) sequence.

Specifically, the DMRS port 0 and the DMRS port 1 are located in a same RE, and resource mapping is performed in a comb manner in frequency domain. To be specific, adjacent frequency domain resources occupied by the DMRS port 0 and the DMRS port 1 are separated by one subcarrier. two adjacent subcarriers occupied by a DMRS port in frequency domain correspond to a frequency domain cover code sequence whose length is 2, for example, (+1, +1) or (+1, -1). One time domain symbol occupied by the DMRS port in time domain corresponds to a time domain cover code sequence whose length is 1, for example, (+1). It may be obtained, based on the frequency domain cover code sequence and the time domain cover code sequence, that a length of a cover code sequence corresponding to the DMRS port is 2 (a cover code sequence corresponding to the DMRS port may be formed by a Kronecker product of the frequency domain cover code sequence and the time domain cover code sequence). For example, for a subcarrier 0 and a subcarrier 2 corresponding to a time domain symbol 0, the DMRS port 0 and the DMRS port 1 may be code division multiplexed by using a cover code sequence whose length is 2. A cover code sequence corresponding to the DMRS port 0 is (+1, +1), and a cover code sequence corresponding to the DMRS port 1 is (+1, -1).

Similarly, the DMRS port 2 and the DMRS port 3 are located in a same RE, and are mapped, in a comb manner in frequency domain, to REs that are not occupied by the DMRS port 0 and the DMRS port 1. For example, for a subcarrier 1 and a subcarrier 3 corresponding to a time domain symbol 0, the DMRS port 2 and the DMRS port 3 may be code division multiplexed by using a cover code sequence whose length is 2. A cover code sequence corresponding to the DMRS port 2 is (+1, +1), and a cover code sequence corresponding to the DMRS port 3 is (+1, -1).

### (1.2) Double-symbol DMRS

A double-symbol DMRS (corresponding to $l'$=0 or 1) supports a maximum of eight orthogonal DMRS ports. The eight orthogonal DMRS ports are divided into two CDM groups: a CDM group 0 and a CDM group 1. The CDM group 0 includes a DMRS port 0, a DMRS port 1, a DMRS port 4, and a DMRS port 5. The CDM group 1 includes a DMRS port 2, a DMRS port 3, a DMRS port 6, and a DMRS port 7. The CDM group 0 and the CDM group 1 are frequency division multiplexed, DMRS ports included in a CDM group are mapped to a same time-frequency resource, and DMRS sequences corresponding to the DMRS ports included in the CDM group are distinguished by using cover code sequences.

Specifically, the DMRS port 0, the DMRS port 1, the DMRS port 4, and the DMRS port 5 are located in a same RE, and resource mapping is performed in a comb manner in frequency domain. To be specific, adjacent frequency domain resources occupied by the DMRS port 0, the DMRS port 1, the DMRS port 4, and the DMRS port 5 are separated by one subcarrier. Two adjacent subcarriers occupied by a DMRS port in frequency domain correspond to a frequency domain cover code sequence whose length is 2, for example, (+1, +1) or (+1, -1). Two adjacent time domain symbols occupied by the DMRS port in time domain correspond to a time domain cover code sequence whose length is 2, for example, (+1, +1) or (+1, -1). It may be obtained, based on the frequency domain cover code sequence and the time domain cover code sequence, that a length of a cover code sequence corresponding to the DMRS port is 4 (a cover code sequence corresponding to the DMRS port may be formed by a Kronecker product of the frequency domain cover code sequence and the time domain cover code sequence). For example, for a subcarrier 0 and a subcarrier 2 corresponding to a time domain symbol 0 and a time domain symbol 1, the DMRS port 0, the DMRS port 1, the DMRS port 4, and the DMRS port 5 may be code division multiplexed by using a cover code sequence whose length is 4. A cover code sequence corresponding to the DMRS port 0 is (+1, +1, +1, +1), a cover code sequence corresponding to the DMRS port 1 is (+1, +1, -1, -1), a cover code sequence corresponding to the DMRS port 4 is (+1, -1, +1, -1), and a cover code sequence corresponding to the DMRS port 5 is (+1, -1, -1, +1).

Similarly, the DMRS port 2, the DMRS port 3, the DMRS port 6, and the DMRS port 7 are located in a same RE, and are mapped, in a comb manner in frequency domain, to subcarriers that are not occupied by the DMRS port 0, the DMRS port 1, the DMRS port 4, and the DMRS port 5. For a subcarrier 1 and a subcarrier 3 corresponding to a time domain symbol 0 and a time domain symbol 1, the DMRS port 2, the DMRS port 3, the DMRS port 6, and the DMRS port 7 may be code division multiplexed by using a cover code sequence whose length is 4. A cover code sequence corresponding to the DMRS port 2 is (+1, +1, +1, +1), a cover code sequence corresponding to the DMRS port 3 is (+1, +1, -1, -1), a cover code sequence corresponding to the DMRS port 6 is (+1, -1, +1, -1), and a cover code sequence corresponding to the DMRS port 7 is (+1, -1, -1, +1).

**(2) Configuration type 2**

For the configuration type 2, values of $w_f(k')$, $w_t(l')$, and $\Delta$ corresponding to the DMRS port $p$ may be determined according to Table 2.

**Table 2: Parameter values corresponding to different DMRS ports (type 2)**

| $p$ | $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

$\lambda$ is an index of a CDM group to which the DMRS port $p$ belongs, and DMRS ports in a same CDM group occupy a same time-frequency resource.

Time-frequency resources to which DMRS sequences corresponding to different DMRS ports are mapped may be determined based on the foregoing time-frequency resource mapping rule (that is, the formula 1) and values of parameters in Table 1, as shown in (b) in FIG. 2. A time domain symbol length occupied by a DMRS port may be 1 or 2. When the time domain symbol length occupied by the DMRS port is 1, a DMRS may be referred to as a single-symbol DMRS. When the time domain symbol length occupied by the DMRS port is 2, a DMRS may be referred to as a double-symbol DMRS. The following separately describes a single-symbol DMRS and a double-symbol DMRS.

**(2.1) Single-symbol DMRS**

A single-symbol DMRS supports a maximum of six orthogonal DMRS ports. The six orthogonal DMRS ports are divided into three CDM groups: a CDM group 0, a CDM group 1, and a CDM group 2. The CDM group 0 includes a DMRS port 0 and a DMRS port 1, the CDM group 1 includes a DMRS port 2 and a DMRS port 3, and the CDM group 2 includes a DMRS port 4 and a DMRS port 5. CDM groups are frequency division multiplexed, and DMRSs corresponding to DMRS ports included in a CDM group are mapped to a same time-frequency resource. DMRS sequences corresponding to the DMRS ports included in the CDM group are distinguished by using cover code sequences. A DMRS sequence corresponding to a DMRS port is mapped to a plurality of resource sub-blocks including two consecutive subcarriers in frequency domain, and adjacent resource sub-blocks are separated by four subcarriers in frequency domain.

Specifically, the DMRS port 0 and the DMRS port 1 are located in a same RE, and resource mapping is performed in a comb manner in frequency domain. For example, a frequency domain resource granularity is 1 RB, and the DMRS port 0 and the DMRS port 1 occupy a subcarrier 0, a subcarrier 1, a subcarrier 6, and a subcarrier 7. The DMRS port 2 and the DMRS port 3 occupy a subcarrier 2, a subcarrier 3, a subcarrier 8, and a subcarrier 9. The DMRS port 4 and the DMRS port 5 occupy a subcarrier 4, a subcarrier 5, a subcarrier 10, and a subcarrier 11. Two DMRS ports included in a CDM group are code division multiplexed in two adjacent subcarriers by using a cover code sequence whose length is 2. For example, cover code sequences corresponding to the two DMRS ports are respectively (+1, +1) and (+1, -1).

**(2.2) Double-symbol DMRS**

A double-symbol DMRS supports a maximum of 12 orthogonal DMRS ports. The 12 orthogonal DMRS ports are divided into three CDM groups. A CDM group 0 includes a DMRS port 0, a DMRS port 1, a DMRS port 6, and a DMRS port 7.

A CDM group 1 includes a DMRS port 2, a DMRS port 3, a DMRS port 8, and a DMRS port 9. A CDM group 2 includes a DMRS port 4, a DMRS port 5, a DMRS port 10, and a DMRS port 11. CDM groups are frequency division multiplexed, and DMRSs corresponding to DMRS ports included in a CDM group are mapped to a same time-frequency resource. DMRS sequences corresponding to the DMRS ports included in the CDM group are distinguished by using cover code sequences. A DMRS sequence corresponding to a DMRS port is mapped to a plurality of resource sub-blocks including two consecutive subcarriers in frequency domain, and adjacent resource sub-blocks are separated by four subcarriers in frequency domain.

Specifically, the DMRS port 0, the DMRS port 1, the DMRS port 6, and the DMRS port 7 are located in a same RE, and resource mapping is performed in a comb manner in frequency domain. For example, a frequency domain resource granularity is 1 RB. The DMRS port 0, the DMRS port 1, the DMRS port 6, and the DMRS port 7 occupy a subcarrier 0, a subcarrier 1, a subcarrier 6, and a subcarrier 7 corresponding to a time domain symbol 0 and a time domain symbol 1. The DMRS port 2, the DMRS port 3, the DMRS port 8, and the DMRS port 9 occupy a subcarrier 2, a subcarrier 3, a subcarrier 8, and a subcarrier 9 corresponding to the time domain symbol 1 and a time domain symbol 2. The DMRS port 4, the DMRS port 5, the DMRS port 10, and the DMRS port 11 occupy a subcarrier 4, a subcarrier 5, a subcarrier 10, and a subcarrier 11 corresponding to the time domain symbol 1 and the time domain symbol 2. Four DMRS ports included in a CDM group are code division multiplexed in two adjacent subcarriers corresponding to two time domain symbols by using a cover code sequence whose length is 4. For example, cover code sequences corresponding to the four DMRS ports are respectively (+1, +1, +1, +1), (+1, +1, -1, -1), (+1, -1, +1, -1), and (+1, -1, -1, +1).

## 5. DMRS port indication

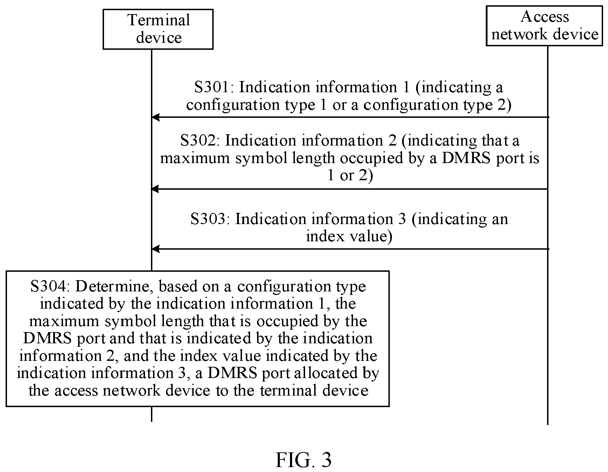

When an access network device communicates with a terminal device through a control channel or a data channel, the access network device needs to indicate, to the terminal device, a DMRS port allocated to the terminal device. With reference to FIG. 3, the following describes a possible implementation in which the access network device indicates, to the terminal device, the DMRS port allocated to the terminal device.

FIG. 3 is a schematic flowchart corresponding to a communication method according to an embodiment of this application. As shown in FIG. 3, the procedure may include the following steps.

S301: The access network device sends indication information 1 to the terminal device, where the indication information 1 indicates that a DMRS configuration type is a configuration type 1 or a configuration type 2. Correspondingly, the terminal device receives the indication information 1.

For example, the access network device may send the indication information 1 to the terminal device by using an RRC message.

S302: The access network device sends indication information 2 to the terminal device, where the indication information 2 indicates that a maximum symbol length occupied by a DMRS port is 1 or 2. Correspondingly, the terminal device receives the indication information 2.

Herein, the maximum symbol length occupied by the DMRS port is a maximum symbol length (or quantity) that can be occupied by a DMRS. In one transmission scheduling, a symbol length actually occupied by a DMRS sent by a transmit end (for example, the access network device or the terminal device) may be less than or equal to the maximum symbol length. For example, when the maximum symbol length is 2, a symbol length actually occupied by a DMRS sent by the transmit end may be 1 or 2 in one transmission scheduling. For another example, when the maximum symbol length is 1, a symbol length actually occupied by a DMRS sent by the transmit end may be 1 in one transmission scheduling.

For example, the access network device may send the indication information 2 to the terminal device by using an RRC message. The indication information 1 and the indication information 2 may be carried in a same message, or may be carried in different messages.

It may be understood that S302 is an optional step. In other words, the access network device may not send the indication information 2 to the terminal device. In this case, the terminal device may consider by default that the maximum symbol length occupied by the DMRS port is 1.

S303: The access network device sends indication information 3 to the terminal device, where the indication information 3 indicates an index value. Further, the terminal device may receive the indication information 3.

For example, the access network device may send the indication information 3 to the terminal device by using a media access control (media access control, MAC) layer message (for example, a MAC control element (control element, CE)) or a physical layer message (for example, downlink control information (Downlink control information, DCI)).

S304: The terminal device determines, based on the configuration type indicated by the indication information 1, the maximum symbol length that is occupied by the DMRS port and that is indicated by the indication information 2, and the index value indicated by the indication information 3, a DMRS port allocated by the access network device to the terminal device.

For example, after the terminal device determines the DMRS port allocated by the access network device to the terminal device, for downlink transmission, the terminal device may receive a DMRS from the access network device on a corresponding time-frequency resource based on the allocated DMRS port according to a DMRS symbol generation method and a time-frequency resource mapping rule that are defined in a protocol, and perform a corresponding channel estimation procedure. For uplink transmission, the terminal device may send a DMRS to the access network device on a corresponding time-frequency resource based on the allocated DMRS port according to a DMRS symbol generation method and a time-frequency resource mapping rule that are defined in a protocol.

With reference to Table 3A to Table 6B, the following describes some possible implementations in which the terminal device determines the DMRS port.

(1) When the indication information 1 indicates the configuration type 1, and the maximum symbol length occupied by the DMRS port is 1, the terminal device may determine, based on Table 3A or Table 3B and the index value indicated by the indication information 3, the DMRS port allocated by the access network device to the terminal device. Whether the terminal device specifically uses Table 3A or Table 3B may be defined in a protocol. For example, when the terminal device receives DCI, and at least one field value (codepoint) in a "Transmission Configuration Indication" field in the DCI corresponds to two transmission configuration indication (transmission configuration indication, TCI) states, the terminal device may use Table 3B; otherwise, the terminal device may use Table 3A.

**Table 3A: Configuration type 1, a maximum symbol length occupied by a DMRS port is 1**

| One codeword: A codeword 0 is enabled, and a codeword 1 is disabled | | |
|---|---|---|
| Index value | Quantity of CDM groups without data | DMRS port index |
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0-2 |
| 10 | 2 | 0-3 |
| 11 | 2 | 0, 2 |
| 12-15 | Reserved | Reserved |

**Table 3B: Configuration type 1, a maximum symbol length occupied by a DMRS port is 1**

| One codeword: A codeword 0 is enabled, and a codeword 1 is disabled | | |
|---|---|---|
| Index value | Quantity of CDM groups without data | DMRS port index |
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0-2 |
| 10 | 2 | 0-3 |

(continued)

| One codeword: A codeword 0 is enabled, and a codeword 1 is disabled | | |
|---|---|---|
| Index value | Quantity of CDM groups without data | DMRS port index |
| 11 | 2 | 0, 2 |
| 12 | 2 | 0, 2, 3 |
| 13-15 | Reserved | Reserved |

Table 3A is used as an example. For example, when the index value indicated by the indication information 3 is "1", because a DMRS port index associated with the index value "1" in Table 3A is 1, the terminal device may determine that the DMRS port allocated by the access network device to the terminal device is a DMRS port 1 in a DMRS port 0 to a DMRS port 3 corresponding to a type-1 single-symbol DMRS. For another example, when the index value indicated by the indication information 3 is "2", because DMRS port indexes associated with the index value "2" in Table 3A are 0 and 1, the terminal device may determine that DMRS ports allocated by the access network device to the terminal device include the DMRS port 0 and the DMRS port 1 in the DMRS port 0 to the DMRS port 3 corresponding to the type-1 single-symbol DMRS.

In addition, in Table 3A and Table 3B, when the quantity of CDM groups without data is 1, the CDM group without data may be a CDM group 0. When the quantity of CDM groups without data is 2, the CDM groups without data may include a CDM group 0 and a CDM group 1. When the quantity of CDM groups without data is 3, the CDM groups without data may include a CDM group 0, a CDM group 1, and a CDM group 3. For "a quantity of CDM groups without data" in another table in this embodiment of this application, refer to the descriptions herein.

(2) When the indication information 1 indicates the configuration type 1, and the maximum symbol length occupied by the DMRS port is 2, the terminal device may determine, based on Table 4A or Table 4B and the index value indicated by the indication information 3, the DMRS port allocated by the access network device to the terminal device. For whether the terminal device specifically uses Table 4A or Table 4B, refer to the foregoing descriptions about whether the terminal device uses Table 3A or Table 3B.

**Table 4A: Configuration type 1, a maximum symbol length occupied by a DMRS port is 2**

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 0 | 1 | 0 | 1 | 0 | 2 | 0-4 | 2 |
| 1 | 1 | 1 | 1 | 1 | 2 | 0, 1, 2, 3, 4, 6 | 2 |
| 2 | 1 | 0, 1 | 1 | 2 | 2 | 0, 1, 2, 3, 4, 5, 6 | 2 |
| 3 | 2 | 0 | 1 | 3 | 2 | 0, 1, 2, 3, 4, 5, 6, 7 | 2 |
| 4 | 2 | 1 | 1 | 4-31 | Reserved | Reserved | Reserved |
| 5 | 2 | 2 | 1 | | | | |
| 6 | 2 | 3 | 1 | | | | |
| 7 | 2 | 0, 1 | 1 | | | | |
| 8 | 2 | 2, 3 | 1 | | | | |
| 9 | 2 | 0-2 | 1 | | | | |
| 10 | 2 | 0-3 | 1 | | | | |
| 11 | 2 | 0, 2 | 1 | | | | |
| 12 | 2 | 0 | 2 | | | | |
| 13 | 2 | 1 | 2 | | | | |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0, 1 | 2 | | | | |
| 21 | 2 | 2, 3 | 2 | | | | |
| 22 | 2 | 4, 5 | 2 | | | | |
| 23 | 2 | 6, 7 | 2 | | | | |
| 24 | 2 | 0, 4 | 2 | | | | |
| 25 | 2 | 2, 6 | 2 | | | | |
| 26 | 2 | 0, 1, 4 | 2 | | | | |
| 27 | 2 | 2, 3, 6 | 2 | | | | |
| 28 | 2 | 0, 1, 4, 5 | 2 | | | | |
| 29 | 2 | 2, 3, 6, 7 | 2 | | | | |
| 30 | 2 | 0, 2, 4, 6 | 2 | | | | |
| 31 | Reserved | Reserved | Reserved | | | | |

**Table 4B: Configuration type 1, a maximum symbol length occupied by a DMRS port is 2**

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 0 | 1 | 0 | 1 | 0 | 2 | 0-4 | 2 |
| 1 | 1 | 1 | 1 | 1 | 2 | 0, 1, 2, 3, 4, 6 | 2 |
| 2 | 1 | 0, 1 | 1 | 2 | 2 | 0, 1, 2, 3, 4, 5, 6 | 2 |
| 3 | 2 | 0 | 1 | 3 | 2 | 0, 1, 2, 3, 4, 5, 6, 7 | 2 |
| 4 | 2 | 1 | 1 | 4-31 | Reserved | Reserved | Reserved |
| 5 | 2 | 2 | 1 | | | | |
| 6 | 2 | 3 | 1 | | | | |
| 7 | 2 | 0, 1 | 1 | | | | |
| 8 | 2 | 2, 3 | 1 | | | | |
| 9 | 2 | 0-2 | 1 | | | | |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 10 | 2 | 0-3 | 1 | | | | |
| 11 | 2 | 0, 2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0, 1 | 2 | | | | |
| 21 | 2 | 2, 3 | 2 | | | | |
| 22 | 2 | 4, 5 | 2 | | | | |
| 23 | 2 | 6, 7 | 2 | | | | |
| 24 | 2 | 0, 4 | 2 | | | | |
| 25 | 2 | 2, 6 | 2 | | | | |
| 26 | 2 | 0, 1, 4 | 2 | | | | |
| 27 | 2 | 2, 3, 6 | 2 | | | | |
| 28 | 2 | 0, 1, 4, 5 | 2 | | | | |
| 29 | 2 | 2, 3, 6, 7 | 2 | | | | |
| 30 | 2 | 0, 2, 4, 6 | 2 | | | | |
| 31 | 2 | 0, 2, 3 | 1 | | | | |

A case of one codeword in Table 4A is used as an example. For example, when the index value indicated by the indication information 3 is "1", because a DMRS port index associated with the index value "1" in Table 4A is 1 and a symbol length occupied by the DMRS port associated with the index value "1" in Table 4A is 1, the terminal device may determine that the DMRS port allocated by the access network device to the terminal device is a DMRS port 1 in a DMRS port 0 to a DMRS port 3 corresponding to a type-1 single-symbol DMRS. For another example, when the index value indicated by the indication information 3 is "12", because the DMRS port index associated with the index value "12" in Table 4A is 0 and the symbol length occupied by the DMRS port associated with the index value "12" in Table 4A is 2, the terminal device may determine that the DMRS port allocated by the access network device to the terminal device is the DMRS port 0 in a DMRS port 0 to a DMRS port 7 corresponding to a type-1 double-symbol DMRS.

(3) When the indication information 1 indicates the configuration type 2, and the maximum symbol length occupied by the DMRS port is 1, the terminal device may determine, based on Table 5A or Table 5B and the index value indicated by the indication information 3, the DMRS port allocated by the access network device to the terminal device. For whether the terminal device specifically uses Table 5A or Table 5B, refer to the foregoing descriptions about whether the terminal device uses Table 3A or Table 3B.

**Table 5A: Configuration type 2, a maximum symbol length occupied by a DMRS port is 1**

| One codeword: A codeword 0 is enabled, and a codeword 1 is disabled | | | Two codewords: The codeword 0 is enabled, and the codeword 1 is enabled | | |
|---|---|---|---|---|---|
| Index value | Quantity of CDM groups without data | DMRS port index | Index value | Quantity of CDM groups without data | DMRS port index |
| 0 | 1 | 0 | 0 | 3 | 0-4 |
| 1 | 1 | 1 | 1 | 3 | 0-5 |
| 2 | 1 | 0, 1 | 2-31 | Reserved | Reserved |
| 3 | 2 | 0 | | | |
| 4 | 2 | 1 | | | |
| 5 | 2 | 2 | | | |
| 6 | 2 | 3 | | | |
| 7 | 2 | 0, 1 | | | |
| 8 | 2 | 2, 3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0, 1 | | | |
| 18 | 3 | 2, 3 | | | |
| 19 | 3 | 4, 5 | | | |
| 20 | 3 | 0-2 | | | |
| 21 | 3 | 3-5 | | | |
| 22 | 3 | 0-3 | | | |
| 23 | 2 | 0, 2 | | | |
| 24-31 | Reserved | Reserved | | | |

**Table 5B: Configuration type 2, a maximum symbol length occupied by a DMRS port is 1**

| One codeword: A codeword 0 is enabled, and a codeword 1 is disabled | | | Two codewords: The codeword 0 is enabled, and the codeword 1 is enabled | | |
|---|---|---|---|---|---|
| Index value | Quantity of CDM groups without data | DMRS port index | Index value | Quantity of CDM groups without data | DMRS port index |
| 0 | 1 | 0 | 0 | 3 | 0-4 |
| 1 | 1 | 1 | 1 | 3 | 0-5 |
| 2 | 1 | 0, 1 | 2-31 | Reserved | Reserved |
| 3 | 2 | 0 | | | |
| 4 | 2 | 1 | | | |
| 5 | 2 | 2 | | | |
| 6 | 2 | 3 | | | |

(continued)

| One codeword: A codeword 0 is enabled, and a codeword 1 is disabled | | | Two codewords: The codeword 0 is enabled, and the codeword 1 is enabled | | |
|---|---|---|---|---|---|
| Index value | Quantity of CDM groups without data | DMRS port index | Index value | Quantity of CDM groups without data | DMRS port index |
| 7 | 2 | 0, 1 | | | |
| 8 | 2 | 2, 3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0, 1 | | | |
| 18 | 3 | 2, 3 | | | |
| 19 | 3 | 4, 5 | | | |
| 20 | 3 | 0-2 | | | |
| 21 | 3 | 3-5 | | | |
| 22 | 3 | 0-3 | | | |
| 23 | 2 | 0, 2 | | | |
| 24 | 2 | 0, 2, 3 | | | |
| 25-31 | Reserved | Reserved | | | |

A case of one codeword Table 5A is used as an example. For example, when the index value indicated by the indication information 3 is "1", because a DMRS port index associated with the index value "1" in Table 5A is 1, the terminal device may determine that the DMRS port allocated by the access network device to the terminal device is a DMRS port 1 in a DMRS port 0 to a DMRS port 5 corresponding to a type-2 single-symbol DMRS.

(4) When the indication information 1 indicates the configuration type 2, and the maximum symbol length occupied by the DMRS port is 2, the terminal device may determine, based on Table 6A or Table 6B and the index value indicated by the indication information 3, the DMRS port allocated by the access network device to the terminal device. For whether the terminal device specifically uses Table 6A or Table 6B, refer to the foregoing descriptions about whether the terminal device uses Table 3A or Table 3B.

**Table 6A: Configuration type 2, a maximum symbol length occupied by a DMRS port is 2**

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6-63 | Reserved | Reserved | Reserved |
| 7 | 2 | 0, 1 | 1 | | | | |
| 8 | 2 | 2, 3 | 1 | | | | |
| 9 | 2 | 0-2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0, 2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0, 1 | 2 | | | | |
| 37 | 3 | 2, 3 | 2 | | | | |
| 38 | 3 | 4, 5 | 2 | | | | |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 39 | 3 | 6, 7 | 2 | | | | |
| 40 | 3 | 8, 9 | 2 | | | | |
| 41 | 3 | 10, 11 | 2 | | | | |
| 42 | 3 | 0, 1, 6 | 2 | | | | |
| 43 | 3 | 2, 3, 8 | 2 | | | | |
| 44 | 3 | 4, 5, 10 | 2 | | | | |
| 45 | 3 | 0, 1, 6, 7 | 2 | | | | |
| 46 | 3 | 2, 3, 8, 9 | 2 | | | | |
| 47 | 3 | 4, 5, 10, 11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0, 1 | 2 | | | | |
| 53 | 1 | 6, 7 | 2 | | | | |
| 54 | 2 | 0, 1 | 2 | | | | |
| 55 | 2 | 2, 3 | 2 | | | | |
| 56 | 2 | 6, 7 | 2 | | | | |
| 57 | 2 | 8, 9 | 2 | | | | |
| 58-63 | Reserved | Reserved | Reserved | | | | |

**Table 6B: Configuration type 2, a maximum symbol length occupied by a DMRS port is 2**

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6-63 | Reserved | Reserved | Reserved |
| 7 | 2 | 0, 1 | 1 | | | | |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 8 | 2 | 2, 3 | 1 | | | | |
| 9 | 2 | 0-2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0, 2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0, 1 | 2 | | | | |
| 37 | 3 | 2, 3 | 2 | | | | |
| 38 | 3 | 4, 5 | 2 | | | | |
| 39 | 3 | 6, 7 | 2 | | | | |
| 40 | 3 | 8, 9 | 2 | | | | |
| 41 | 3 | 10, 11 | 2 | | | | |
| 42 | 3 | 0, 1, 6 | 2 | | | | |
| 43 | 3 | 2, 3, 8 | 2 | | | | |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 44 | 3 | 4, 5, 10 | 2 | | | | |
| 45 | 3 | 0, 1, 6, 7 | 2 | | | | |
| 46 | 3 | 2, 3, 8, 9 | 2 | | | | |
| 47 | 3 | 4, 5, 10, 11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0, 1 | 2 | | | | |
| 53 | 1 | 6, 7 | 2 | | | | |
| 54 | 2 | 0, 1 | 2 | | | | |
| 55 | 2 | 2, 3 | 2 | | | | |
| 56 | 2 | 6, 7 | 2 | | | | |
| 57 | 2 | 8, 9 | 2 | | | | |
| 58 | 2 | 0, 2, 3 | 1 | | | | |
| 59-63 | Reserved | Reserved | Reserved | | | | |

A case of one codeword in Table 6A is used as an example. For example, when the index value indicated by the indication information 3 is "1", because a DMRS port index associated with the index value "1" in Table 6 is 1 and a symbol length occupied by the DMRS port associated with the index value "1" in Table 6 is 1, the terminal device may determine that the DMRS port allocated by the access network device to the terminal device is a DMRS port 1 in a DMRS port 0 to a DMRS port 5 corresponding to a type-2 single-symbol DMRS. For another example, when the index value indicated by the indication information 3 is "25", because the DMRS port index associated with the index value "25" in Table 6 is 1 and the symbol length occupied by the DMRS port associated with the index value "25" in Table 6 is 2, the terminal device may determine that the DMRS port allocated by the access network device to the terminal device is a DMRS port 1 in a DMRS port 0 to a DMRS port 11 corresponding to a type-2 double-symbol DMRS.

## 6. DMRS port expansion

It can be learned from the foregoing descriptions that a maximum quantity of orthogonal DMRS ports supported by the configuration type 1 is 8, and a maximum quantity of orthogonal DMRS ports supported by the configuration type 2 is 12. When a plurality of parallel data streams are simultaneously transmitted on a same time-frequency resource, each data stream may be referred to as a spatial layer, a spatial stream, or a transmission stream, and one DMRS port may correspond to one spatial layer or transmission stream. DMRS port indexes corresponding to V spatial layers may be determined based on a sequence of DMRS port indexes in Table 3A to Table 6B. For example, the V spatial layers include a spatial layer 0 and a spatial layer 1. When DMRS port indexes allocated by the access network device to the terminal device are "0, 1", the spatial layer 0 corresponds to the DMRS port 0, and the spatial layer 1 corresponds to the DMRS port 1. When DMRS port indexes allocated by the access network device to the terminal device are "2, 3", the spatial layer 0 corresponds to the DMRS port 2, and the spatial layer 1 corresponds to the DMRS port 3.

However, as wireless communication devices are deployed more densely, and a quantity of terminal devices further increases, a higher requirement (more than 12 transmission streams) is imposed on a quantity of MIMO transmission streams. However, a maximum of 12 DMRS ports cannot ensure good transmission performance of more than 12 transmission streams. Therefore, to support more transmission streams, DMRS ports need to be expanded.

There may be a plurality of methods for expanding the DMRS ports. For example, DMRS ports may be expanded through code division multiplexing, or DMRS ports may be expanded through frequency division multiplexing. The following describes related content of DMRS port expansion by using an example in which the DMRS ports are expanded through code division multiplexing.

**(1) A newly added DMRS port is described for the configuration type 1**

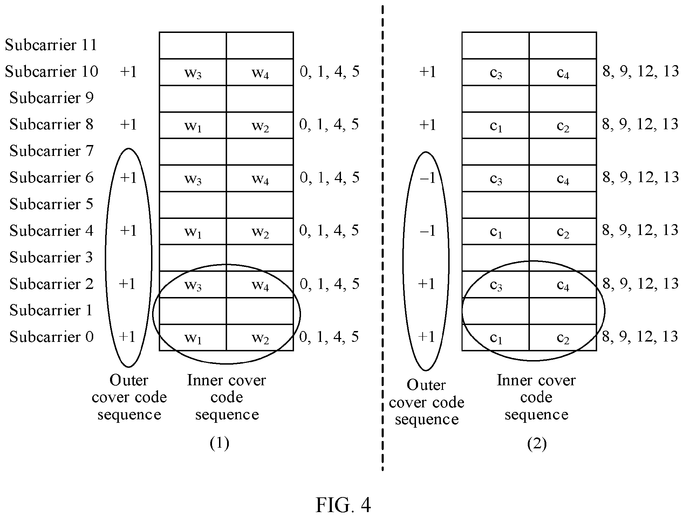

A double-symbol DMRS of the configuration type 1 is used as an example. A DMRS port 0 to a DMRS port 7 may be referred to as existing DMRS ports, and a DMRS port 8 to a DMRS port 15 are expanded DMRS ports and may be referred to as newly added DMRS ports. Time-frequency resources corresponding to the existing DMRS ports and time-frequency resources corresponding to the newly added DMRS ports are the same. The following provides descriptions with reference to FIG. 4. In FIG. 4, a vertical direction represents frequency domain, a horizontal direction represents time domain, one grid represents one RE, and one RE corresponds to one subcarrier in frequency domain and corresponds to one time domain symbol in time domain. In addition, the time-frequency resources corresponding to the existing DMRS ports and the time-frequency resources corresponding to the newly added DMRS ports are the same. Therefore, a plurality of REs shown in (1) and a plurality of REs shown in (2) in FIG. 4 may be same REs. In FIG. 4, for ease of description, the existing DMRS port and the newly added DMRS port are separately shown. FIG. 4 shows only a case of one RB. For a case of a plurality of RBs, refer to FIG. 4.

For the existing DMRS ports, as described above, one CDM group includes four DMRS ports that are mapped to two subcarriers and two time domain symbols (that is, four REs). As shown in (1) in FIG. 4, one CDM group is used as an example. The CDM group corresponds to the existing DMRS port 0, DMRS port 1, DMRS port 4, and DMRS port 5, and occupies subcarriers whose indexes are 0/2/4/6/8/10 in one RB. The four DMRS ports in the CDM group may be code division multiplexed by using an inner cover code sequence whose length is 4. Specifically, each DMRS port may correspond to an inner frequency domain cover code sequence whose length is 2 and an inner time domain cover code sequence whose length is 2. That is, each DMRS port may correspond to an inner cover code sequence whose length is 4 (represented as $(w_1, w_2, w_3, w_4)$), and there is a one-to-one correspondence between elements in each inner cover code sequence and four REs. The inner cover code sequence whose length is 4 may be formed by a Kronecker product of the corresponding inner frequency domain cover code sequence and the inner time domain cover code sequence. Inner cover code sequences corresponding to any two DMRS ports in four DMRS ports of one CDM group are orthogonal.

For example, an inner cover code sequence $(w_1, w_2, w_3, w_4)$ corresponding to the DMRS port 0 is (+1+1+1+1), an inner cover code sequence $(w_1, w_2, w_3, w_4)$ corresponding to the DMRS port 1 may be (+1+1-1-1), an inner cover code sequence $(w_1, w_2, w_3, w_4)$ corresponding to the DMRS port 4 may be (+1-1+1-1), and an inner cover code sequence $(w_1, w_2, w_3, w_4)$ corresponding to the DMRS port 5 may be (+1-1-1+1).

A newly added DMRS port may also correspond to two CDM groups, and each CDM group corresponds to four DMRS ports. One CDM group corresponds to four DMRS ports that are mapped to two subcarriers and two time domain symbols (that is, four REs). As shown in (2) in FIG. 4, one CDM group is used as an example. The CDM group corresponds to the newly added DMRS port 8, DMRS port 9, DMRS port 12, and DMRS port 13, and occupies subcarriers whose indexes are 0/2/4/6/8/10 in one RB. The four DMRS ports in the CDM group may be code division multiplexed by using an inner cover code sequence whose length is 4. Specifically, each DMRS port may correspond to an inner frequency domain cover code sequence whose length is 2 and an inner time domain cover code sequence whose length is 2. That is, each DMRS port may correspond to an inner cover code sequence whose length is 4 (represented as $(c_1, c_2, c_3, c_4)$), and there is a one-to-one correspondence between elements in each inner cover code sequence and four REs. The inner cover code sequence whose length is 4 may be formed by a Kronecker product of the corresponding inner frequency domain cover code sequence and the inner time domain cover code sequence. Inner cover code sequences corresponding to any two DMRS ports in four DMRS ports of one CDM group are orthogonal. The following describes two possible implementations of the inner cover code sequence with reference to an example a1 and an example a2.

Example a1: An inner cover code sequence $(c_1, c_2, c_3, c_4)$ corresponding to the DMRS port 8 may be (+1, +1, +1, +1), an inner cover code sequence $(c_1, c_2, c_3, c_4)$ corresponding to the DMRS port 9 may be (+1, +1, -1, -1), an inner cover code sequence $(c_1, c_2, c_3, c_4)$ corresponding to the DMRS port 12 may be (+1, -1, +1, -1), and an inner cover code sequence $(c_1, c_2, c_3, c_4)$ corresponding to the DMRS port 13 may be (+1, -1, -1, +1).

Example a2: The inner cover code sequence $(c_1, c_2, c_3, c_4)$ corresponding to the DMRS port 8 may be (+1, +j, +j, -1), the inner cover code sequence $(c_1, c_2, c_3, c_4)$ corresponding to the DMRS port 9 may be (+1, +j, -j, +1), the inner cover code sequence $(c_1, c_2, c_3, c_4)$ corresponding to the DMRS port 12 may be (+1, -j, +j, +1), and the inner cover code sequence $(c_1, c_2, c_3, c_4)$ corresponding to the DMRS port 13 may be (+1, -j, -j, -1).

Further, for four consecutive subcarriers (the four subcarriers may be referred to as a group of subcarriers) mapped to a DMRS port, the four existing DMRS ports (for example, the DMRS port 0, the DMRS port 1, the DMRS port 4, and the DMRS port 5) and the four newly added DMRS ports (for example, the DMRS port 8, the DMRS port 9, the DMRS port 12, and the DMRS port 13) may be code division multiplexed by using an outer cover code sequence $(b_1, b_2, b_3, b_4)$ whose length is 4. For example, for a subcarrier 0, a subcarrier 2, a subcarrier 4, and a subcarrier 6, the four existing DMRS ports (for example, the DMRS port 0, the DMRS port 1, the DMRS port 4, and the DMRS port 5) and the four newly added DMRS ports (for example, the DMRS port 8, the DMRS port 9, the DMRS port 12, and the DMRS port 13) may be code division multiplexed by using an outer cover code sequence ($b_1$, $b_2$, $b_3$, $b_4$) whose length is 4. An outer cover code sequence ($b_1$, $b_2$, $b_3$, $b_4$) corresponding to the four existing DMRS ports is, for example, (+1, +1, +1, +1), and an outer cover code sequence ($b_1$, $b_2$, $b_3$, $b_4$) corresponding to the four newly added DMRS ports is, for example, (+1, +1, -1, -1). The two outer cover code sequences are orthogonal. One element in the outer cover code sequence ($b_1$, $b_2$, $b_3$, $b_4$) corresponds to one subcarrier in a group of subcarriers. For example, the subcarrier 0 corresponds to a sequence element $b_1$, the subcarrier 2 corresponds to a sequence element $b_2$, the subcarrier 4 corresponds to a sequence element $b_3$, and the subcarrier 6 corresponds to a sequence element $b_4$.

## (2) A newly added DMRS port is described for the configuration type 2

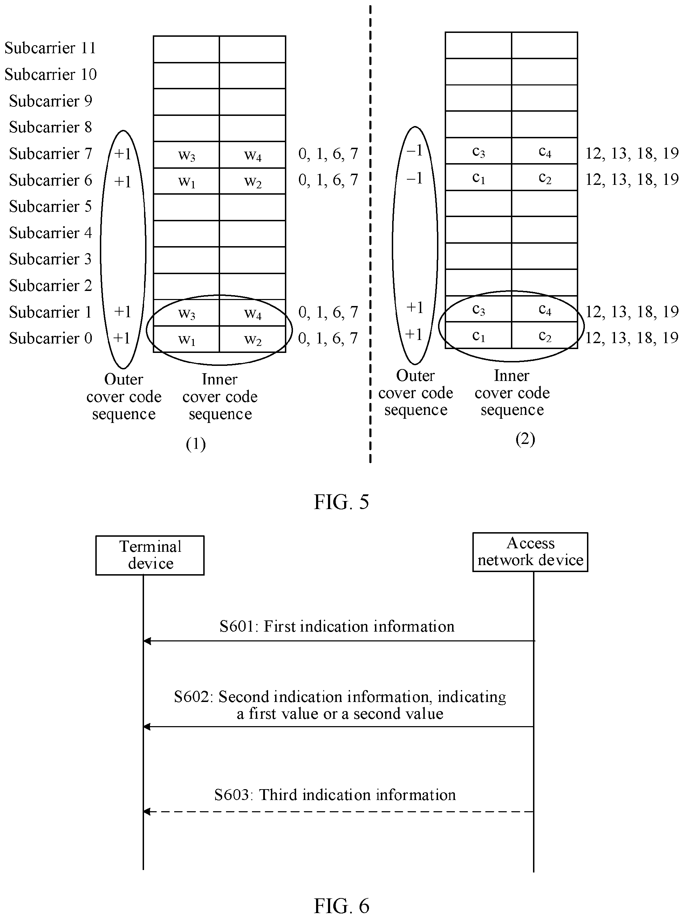

A double-symbol DMRS of the configuration type 2 is used as an example. A DMRS port 0 to a DMRS port 11 may be referred to as existing DMRS ports, and a DMRS port 12 to a DMRS port 23 are expanded DMRS ports and may be referred to as newly added DMRS ports. Time-frequency resources corresponding to the existing DMRS ports and time-frequency resources corresponding to the newly added DMRS ports are the same. The following provides descriptions with reference to FIG. 5. A plurality of REs shown in (1) and a plurality of REs shown in (2) in FIG. 5 may be same REs. For other cases, refer to the descriptions in FIG. 4.

For the existing DMRS ports, as described above, one CDM group includes four DMRS ports that are mapped to two subcarriers and two time domain symbols (that is, four REs). As shown in (1) in FIG. 5, one CDM group is used as an example. The CDM group corresponds to the existing DMRS port 0, DMRS port 1, DMRS port 6, and DMRS port 7, and occupies subcarriers whose indexes are 0/1//6/7 in one RB. The four DMRS ports in the CDM group may be code division multiplexed by using an inner cover code sequence whose length is 4. Specifically, each DMRS port may correspond to an inner frequency domain cover code sequence whose length is 2 and an inner time domain cover code sequence whose length is 2. That is, each DMRS port may correspond to an inner cover code sequence whose length is 4 (represented as ($w_1$, $w_2$, $w_3$, $w_4$)), and there is a one-to-one correspondence between elements in each inner cover code sequence and four REs. The inner cover code sequence whose length is 4 may be formed by a Kronecker product of the corresponding inner frequency domain cover code sequence and the inner time domain cover code sequence. Inner cover code sequences corresponding to any two DMRS ports in four DMRS ports of one CDM group are orthogonal.

For example, an inner cover code sequence ($w_1$, $w_2$, $w_3$, $w_4$) corresponding to the DMRS port 0 is (+1, +1, +1, +1), an inner cover code sequence ($w_1$, $w_2$, $w_3$, $w_4$) corresponding to the DMRS port 1 may be (+1, +1, -1, -1), an inner cover code sequence ($w_1$, $w_2$, $w_3$, $w_4$) corresponding to the DMRS port 6 may be (+1, -1, +1, -1), and an inner cover code sequence ($w_1$, $w_2$, $w_3$, $w_4$) corresponding to the DMRS port 7 may be (+1, -1, -1, +1).

A newly added DMRS port may also correspond to two CDM groups, and each CDM group corresponds to four DMRS ports. One CDM group corresponds to four DMRS ports that are mapped to two subcarriers and two time domain symbols (that is, four REs). As shown in (2) in FIG. 5, one CDM group is used as an example. The CDM group corresponds to the newly added DMRS port 12, DMRS port 13, DMRS port 18, and DMRS port 19, and occupies subcarriers whose indexes are 0/1/6/7 in one RB. The four DMRS ports in the CDM group may be code division multiplexed by using an inner cover code sequence whose length is 4. Specifically, each DMRS port may correspond to an inner frequency domain cover code sequence whose length is 2 and an inner time domain cover code sequence whose length is 2. That is, each DMRS port may correspond to an inner cover code sequence whose length is 4 (represented as ($c_1$, $c_2$, $c_3$, $c_4$)), and there is a one-to-one correspondence between elements in each inner cover code sequence and four REs. The inner cover code sequence whose length is 4 may be formed by a Kronecker product of the corresponding inner frequency domain cover code sequence and the inner time domain cover code sequence. Inner cover code sequences corresponding to any two DMRS ports in four DMRS ports of one CDM group are orthogonal. The following describes two possible implementations of the inner cover code sequence with reference to an example b1 and an example b2.

Example b1: An inner cover code sequence ($c_1$, $c_2$, $c_3$, $c_4$) corresponding to the DMRS port 12 may be (+1, +1, +1, +1), an inner cover code sequence ($c_1$, $c_2$, $c_3$, $c_4$) corresponding to the DMRS port 13 may be (+1, +1, -1, -1), an inner cover code sequence ($c_1$, $c_2$, $c_3$, $c_4$) corresponding to the DMRS port 18 may be (+1, -1, +1, -1), and an inner cover code sequence ($c_1$, $c_2$, $c_3$, $c_4$) corresponding to the DMRS port 19 may be (+1, -1, -1, +1).

Example b2: The inner cover code sequence ($c_1$, $c_2$, $c_3$, $c_4$) corresponding to the DMRS port 12 may be (+1, +j, +j, -1), the inner cover code sequence ($c_1$, $c_2$, $c_3$, $c_4$) corresponding to the DMRS port 13 may be (+1, +j, -j, +1), the inner cover code sequence ($c_1$, $c_2$, $c_3$, $c_4$) corresponding to the DMRS port 18 may be (+1, -j, +j, +1), and the inner cover code sequence ($c_1$, $c_2$, $c_3$, $c_4$) corresponding to the DMRS port 19 may be (+1, -j, -j, -1).

Further, for four consecutive subcarriers (the four subcarriers may be referred to as a group of subcarriers) mapped to a DMRS port, the four existing DMRS ports (for example, the DMRS port 0, the DMRS port 1, the DMRS port 6, and the DMRS port 7) and the four newly added DMRS ports (for example, the DMRS port 12, the DMRS port 13, the DMRS port 18, and the DMRS port 19) may be code division multiplexed by using an outer cover code sequence ($b_1$, $b_2$, $b_3$, $b_4$)

whose length is 4. For example, for a subcarrier 0, a subcarrier 1, a subcarrier 6, and a subcarrier 7, the four existing DMRS ports (for example, the DMRS port 0, the DMRS port 1, the DMRS port 6, and the DMRS port 7) and the four newly added DMRS ports (for example, the DMRS port 12, the DMRS port 13, the DMRS port 18, and the DMRS port 19) may be code division multiplexed by using an outer cover code sequence $(b_1, b_2, b_3, b_4)$ whose length is 4. An outer cover code sequence $(b_1, b_2, b_3, b_4)$ corresponding to the four existing DMRS ports is, for example, (+1, +1, +1, +1), and an outer cover code sequence $(b_1, b_2, b_3, b_4)$ corresponding to the four newly added DMRS ports is, for example, (+1, +1, -1, -1). The two outer cover code sequences are orthogonal. One element in the outer cover code sequence $(b_1, b_2, b_3, b_4)$ corresponds to one subcarrier in a group of subcarriers. For example, the subcarrier 0 corresponds to a sequence element $b_1$, the subcarrier 1 corresponds to a sequence element $b_2$, the subcarrier 6 corresponds to a sequence element $b_3$, and the subcarrier 7 corresponds to a sequence element $b_4$.

Based on the foregoing descriptions in (1) and (2), after DMRS ports are expanded in a code division multiplexing manner, as shown in Table 7, a single-symbol DMRS of the configuration type 1 can support a maximum of eight ports, a double-symbol DMRS of the configuration type 1 may support a maximum of 16 ports, a single-symbol DMRS of the configuration type 2 may support a maximum of 12 ports, and a double-symbol DMRS of the configuration type 2 may support a maximum of 24 ports.

**Table 7: Existing DMRS ports and newly added DMRS ports corresponding to different configuration types**

| Configuration type | | Existing DMRS port index | Newly added DMRS port index |
|---|---|---|---|
| Configuration type 1 | Single-symbol | 0, 1, 2, 3 | 4, 5, 6, 7 |
| | Double-symbol | 0, 1, 2, 3, 4, 5, 6, 7 | 8, 9, 10, 11, 12, 13, 14, 15 |
| Configuration type 2 | Single-symbol | 0, 1, 2, 3, 4, 5 | 6, 7, 8, 9, 10, 11 |
| | Double-symbol | 0, 1, 2, 3, 4, 5, 6, 7, 8, 9, 10, 11 | 12, 13, 14, 15, 16, 17, 18, 19, 20, 21, 22, 23 |

**(3) Time-frequency resource mapping rule after DMRS port expansion**

A DMRS sequence corresponding to an existing DMRS port may be mapped to a corresponding time-frequency resource according to a time-frequency resource mapping rule after being multiplied by a corresponding inner cover code sequence and an outer cover code sequence. ADMRS sequence corresponding to a newly added DMRS port may be mapped to a corresponding time-frequency resource according to a time-frequency resource mapping rule after being multiplied by a corresponding inner cover code sequence and an outer cover code sequence.

Therefore, after DMRS port expansion, the time-frequency resource mapping rule may satisfy the following formula 2:

$$a_{k,l}^{(p,\mu)} = \beta_{PDSCH}^{DMRS} c_f\left(k'\right) c_t\left(l'\right) b\left(n \bmod 2\right) r\left(2n + k'\right)$$

$$k = \begin{cases} 4n + 2k' + \Delta & Type1 \\ 6n + k' + \Delta & Type2 \end{cases};$$

$$k' = 0, 1;$$

$$l = \overline{l} + l';$$

$$n = 0, 1, ...;$$

$$l' = 0, 1;$$

$p$ is a DMRS port index, $\mu$ is a subcarrier spacing parameter, $a_{k,l}^{(p,\mu)}$ is a DMRS symbol corresponding to the DMRS port $p$ mapped to an RE whose index is $(k,l)_{p,\mu}$, $\beta_{PDSCH}^{DMRS}$ is a power scaling factor or a power control factor, $c_t(l')$ is an inner time domain cover code sequence element corresponding to a time domain symbol whose index is $l'$, and $c_f(k')$ is an inner frequency domain cover code sequence element corresponding to a subcarrier whose index is $k'$. $b(n \bmod 2)$ is an outer cover code sequence. For an existing DMRS port, b(0)=1, and b(1)=1. For a newly added DMRS port, b(0)=1, and b(1)=-1, or b(0)=-1, and b(1)=1. $m = 2n + k'$, $\Delta$ is a subcarrier offset factor, and $\bar{l}$ is a symbol index of a start time domain symbol occupied by the DMRS symbol or a symbol index of a reference time domain symbol.

It may be understood that, with reference to a form of the formula 1, the formula 2 may be equivalently described as the following formula 3:

$$a_{k,l}^{(p,\mu)} = \beta_{PDSCH}^{DMRS} s_f\left(k'\right) s_t\left(l'\right) r\left(2n+k'\right)$$

$$s_f\left(k'\right) = c_f\left(k'\right) b\left(n \bmod 2\right)$$

$$s_t\left(l'\right) = c_t\left(l'\right)$$

$s_f(k')$ is a frequency domain cover code sequence element corresponding to a subcarrier whose index is $k'$, and $s_t(l')$ is a time domain cover code sequence element corresponding to a time domain symbol whose index is $l'$.

It can be learned from the formula 3 that, after DMRS port expansion, a frequency domain cover code sequence corresponding to each DMRS port may be equivalently represented as a product of an inner frequency domain cover code sequence $c_f(k')$ and an outer cover code sequence {$b(0)$, $b(1)$}. An outer cover code sequence element $b(0)$ corresponds to two adjacent subcarriers in a group of subcarriers occupied by the DMRS port. To be specific, the outer cover code sequence element $b(0)$ corresponds to $c_f(0)$ and $c_f(1)$. Similarly, an outer cover code sequence element $b(1)$ corresponds to the other two adjacent subcarriers in the group of subcarriers occupied by the DMRS port. To be specific, the outer cover code sequence element $b(1)$ corresponds to $c_f(0)$ and $c_f(1)$. Therefore, a length of the frequency domain cover code sequence corresponding to each DMRS port is 4, and may be represented as ($c_f(0)b(0)$, $c_f(1)b(0)$, $c_f(0)b(1)$, $c_f(1)b(1)$). However, when a DMRS port is not expanded (refer to the foregoing descriptions), a length of a frequency domain cover code sequence corresponding to each DMRS port is 2.

Further, in the formula 2 or formula 3, values of $c_f(k')$, $c_t(l')$, and $\Delta$ corresponding to the DMRS port $p$ are related to a DMRS configuration type. For details, refer to the following descriptions in (3.1) and (3.2).

## (3.1) Configuration type 1

For the configuration type 1, values of $c_f(k')$, $c_t(l')$, and $\Delta$ corresponding to the DMRS port $p$ may be determined according to Table 8A or Table 8B below. When the inner cover code sequence described in the foregoing example a1 is used, the values of $c_f(k')$, $c_t(l')$, and $\Delta$ may be determined according to Table 8A. When the inner cover code sequence described in the foregoing example a2 is used, the values of $c_f(k')$, $c_t(l')$, and $\Delta$ may be determined according to Table 8B.

**Table 8A: Parameter values corresponding to different DMRS ports (type 1)**

| $p$ | $\lambda$ | $\Delta$ | $c_f(k')$ | | $c_t(l')$ | |
|---|---|---|---|---|---|---|
| | | | $k' = 0$ | $k' = 1$ | $l' = 0$ | $l' = 1$ |
| 1008 | 0 | 0 | +1 | +1 | +1 | +1 |
| 1009 | 0 | 0 | +1 | -1 | +1 | +1 |
| 1010 | 1 | 1 | +1 | +1 | +1 | +1 |
| 1011 | 1 | 1 | +1 | -1 | +1 | +1 |
| 1012 | 0 | 0 | +1 | +1 | +1 | -1 |
| 1013 | 0 | 0 | +1 | -1 | +1 | -1 |
| 1014 | 1 | 1 | +1 | +1 | +1 | -1 |
| 1015 | 1 | 1 | +1 | -1 | +1 | -1 |

**Table 8B: Parameter values corresponding to different DMRS ports (type 1)**

| $p$ | $\lambda$ | $\Delta$ | $c_f(k')$ | | $c_t(l')$ | |
|---|---|---|---|---|---|---|
| | | | $k' = 0$ | $k' = 1$ | $l' = 0$ | $l' = 1$ |
| 1008 | 0 | 0 | +1 | j | +1 | j |
| 1009 | 0 | 0 | +1 | -j | +1 | j |
| 1010 | 1 | 1 | +1 | j | +1 | j |
| 1011 | 1 | 1 | +1 | -j | +1 | j |
| 1012 | 0 | 0 | +1 | j | +1 | -j |
| 1013 | 0 | 0 | +1 | -j | +1 | -j |
| 1014 | 1 | 1 | +1 | j | +1 | -j |
| 1015 | 1 | 1 | +1 | -j | +1 | -j |

**(3.2) Configuration type 2**

For the configuration type 2, values of $c_f(k')$, $c_t(l')$, and $\Delta$ corresponding to the DMRS port $p$ may be determined according to Table 9A or Table 9B below. When the inner cover code sequence described in the foregoing example b1 is used, the values of $c_f(k')$, $c_t(l')$, and $\Delta$ may be determined according to Table 9A. When the inner cover code sequence described in the foregoing example b2 is used, the values of $c_f(k')$, $c_t(l')$, and $\Delta$ may be determined according to Table 9B.

**Table 9A: Parameter values corresponding to different DMRS ports (type 2)**

| $p$ | $\lambda$ | $\Delta$ | $c_f(k')$ | | $c_t(l')$ | |
|---|---|---|---|---|---|---|
| | | | $k' = 0$ | $k' = 1$ | $l' = 0$ | $l' = 1$ |
| 1012 | 0 | 0 | +1 | +1 | +1 | +1 |
| 1013 | 0 | 0 | +1 | -1 | +1 | +1 |
| 1014 | 1 | 2 | +1 | +1 | +1 | +1 |
| 1015 | 1 | 2 | +1 | -1 | +1 | +1 |
| 1016 | 2 | 4 | +1 | +1 | +1 | +1 |
| 1017 | 2 | 4 | +1 | -1 | +1 | +1 |
| 1018 | 0 | 0 | +1 | +1 | +1 | -1 |
| 1019 | 0 | 0 | +1 | -1 | +1 | -1 |
| 1020 | 1 | 2 | +1 | +1 | +1 | -1 |
| 1021 | 1 | 2 | +1 | -1 | +1 | -1 |
| 1022 | 2 | 4 | +1 | +1 | +1 | -1 |
| 1023 | 2 | 4 | +1 | -1 | +1 | -1 |

**Table 9B: Parameter values corresponding to different DMRS ports (type 2)**

| $p$ | $\lambda$ | $\Delta$ | $c_f(k')$ | | $c_t(l')$ | |
|---|---|---|---|---|---|---|
| | | | $k' = 0$ | $k' = 1$ | $l' = 0$ | $l' = 1$ |
| 1012 | 0 | 0 | +1 | j | +1 | j |
| 1013 | 0 | 0 | +1 | -j | +1 | j |
| 1014 | 1 | 2 | +1 | j | +1 | j |
| 1015 | 1 | 2 | +1 | -j | +1 | j |
| 1016 | 2 | 4 | +1 | j | +1 | j |
| 1017 | 2 | 4 | +1 | -j | +1 | j |

(continued)

| p | λ | Δ | $c_f(k')$ | | $c_t(l')$ | |
|---|---|---|---|---|---|---|
| | | | k' = 0 | k' = 1 | l' = 0 | l' = 1 |
| 1018 | 0 | 0 | +1 | j | +1 | -j |
| 1019 | 0 | 0 | +1 | -j | +1 | -j |
| 1020 | 1 | 2 | +1 | j | +1 | -j |
| 1021 | 1 | 2 | +1 | -j | +1 | -j |
| 1022 | 2 | 4 | +1 | j | +1 | -j |
| 1023 | 2 | 4 | +1 | -j | +1 | -j |

Based on the descriptions of the foregoing related technical features, in embodiments of this application, how the access network device indicates, to the terminal device after DMRS port expansion, the DMRS port allocated to the terminal device is studied.

Before the communication method provided in embodiments of this application is described, related concepts in embodiments of this application are first described.

**DMRS port index group:** One DMRS port index group may include one or more DMRS port indexes, and one DMRS port index group may be associated with one index value.

**Set:** One set may include one or more DMRS port index groups. For example, one set includes N DMRS port index groups. When each of the N DMRS port index groups includes at least one of M DMRS port indexes, it may be considered that the M DMRS port indexes correspond to the set. M and N are positive integers.

**Association relationship:** Two DMRS port index groups (for example, a first DMRS port index group and a second DMRS port index group) belonging to different sets may have an association relationship.

In a possible implementation, that the first DMRS port index group and the second DMRS port index group have an association relationship may include one or more of the following:

① The first DMRS port index group and the second DMRS port index group are associated with a same index value.

② There is a one-to-one correspondence between DMRS port indexes in the first DMRS port index group and DMRS port indexes in the second DMRS port index group. For example, there may be an offset between two corresponding DMRS port indexes.

③ The first DMRS port index group is a subset of the second DMRS port index group. For example, the second DMRS port index group may include a port index in the first DMRS port index group, and further include a DMRS port index corresponding to the DMRS port index in the first DMRS port index group. For example, the first DMRS port index group includes a first DMRS port index, and there is an offset between a DMRS port index corresponding to the first DMRS port index and the first DMRS port index.

In embodiments of this application, an example in which the association relationship between the first DMRS port index group and the second DMRS port index group is a first association relationship or a second association relationship is used for description. That the first DMRS port index group and the second DMRS port index group have the first association relationship may include ① and ②, and that the first DMRS port index group and the second DMRS port index group have the second association relationship may include ① and ③.

The following describes the sets and the DMRS port index groups in detail based on the first association relationship and the second association relationship for different configuration types.

### 1. First association relationship

### (1) Single-symbol DMRS of the configuration type 1

For four existing DMRS port indexes (namely, "0 to 3") corresponding to the single-symbol DMRS of the configuration type 1, Table 3A is used as an example (for Table 3B, refer to Table 3A). The four DMRS port indexes correspond to a set 1, and the set 1 may include 12 DMRS port index groups associated with index values "0 to 11" in Table 3A. Each DMRS port index group includes one or more DMRS port indexes. For example, DMRS port indexes included in a DMRS port index group associated with an index value "2" are "0" and "1". A correspondence between the four DMRS port indexes and the set 1 may also be understood in this way: the set 1 includes 12 DMRS port index groups. A DMRS port index included in any DMRS port index group is one or more DMRS port indexes in the four DMRS port indexes.

For four newly added DMRS port indexes (namely, "4 to 7") corresponding to the single-symbol DMRS of the configuration type 1, Table 10A is used as an example (for Table 10B, refer to Table 10A). The four DMRS port indexes correspond to a set 2, and the set 2 may include 12 DMRS port index groups associated with index values "0 to 11" in Table 10A. The DMRS port index group included in the set 2 and the DMRS port index group included in the set 1 have the first association relationship.

**Table 10A: Configuration type 1, a maximum symbol length occupied by a DMRS port (a newly added DMRS port) is 1**

| One codeword: A codeword 0 is enabled, and a codeword 1 is disabled | | |
|---|---|---|
| Index value | Quantity of CDM groups without data | DMRS port index |
| 0 | 1 | 4 |
| 1 | 1 | 5 |
| 2 | 1 | 4, 5 |
| 3 | 2 | 4 |
| 4 | 2 | 5 |
| 5 | 2 | 6 |
| 6 | 2 | 7 |
| 7 | 2 | 4, 5 |
| 8 | 2 | 6, 7 |
| 9 | 2 | 4-6 |
| 10 | 2 | 4-7 |
| 11 | 2 | 4, 6 |
| 12-15 | Reserved | Reserved |

**Table 10B: Configuration type 1, a maximum symbol length occupied by a DMRS port (a newly added DMRS port) is 1**

| One codeword: A codeword 0 is enabled, and a codeword 1 is disabled | | |
|---|---|---|
| Index value | Quantity of CDM groups without data | DMRS port index |
| 0 | 1 | 4 |
| 1 | 1 | 5 |
| 2 | 1 | 4, 5 |
| 3 | 2 | 4 |
| 4 | 2 | 5 |
| 5 | 2 | 6 |
| 6 | 2 | 7 |
| 7 | 2 | 4, 5 |
| 8 | 2 | 6, 7 |
| 9 | 2 | 4-6 |
| 10 | 2 | 4-7 |
| 11 | 2 | 4, 6 |
| 12 | 2 | 4, 6, 7 |
| 13-15 | Reserved | Reserved |

Table 10A corresponds to Table 3A, and Table 10B corresponds to Table 3B. Table 10A and Table 3A are used as an example. For example, the set 1 includes a DMRS port index group a1, and the DMRS port index group a1 is any one of the 12 DMRS port index groups shown in Table 3A. The set 2 includes a DMRS port index group b1, and the DMRS port index group b1 is any one of the 12 DMRS port index groups shown in Table 10A. The DMRS port index group a1 and the DMRS port index group b1 have the first association relationship. Specifically, the DMRS port index group a1 and the DMRS port index group b1 are associated with a same index value, there is a one-to-one correspondence between DMRS port indexes in the DMRS port index group a1 and DMRS port indexes in the DMRS port index group b1, and there is an offset between corresponding DMRS port indexes.

A value of the offset may be determined based on a configuration type and a symbol length occupied by a DMRS port. When the configuration type is the configuration type 1 and the symbol length occupied by the DMRS port is 1, the value of the offset may be 4. That is, the value of the offset may be equal to a quantity of DMRS port indexes corresponding to the set 1, or the value of the offset may be equal to a maximum quantity of orthogonal DMRS ports supported by the single-symbol DMRS of the configuration type 1.

For example, a DMRS port index included in the DMRS port index group a1 associated with the index value "0" in Table 3A is "0", a DMRS port index included in the DMRS port index group b1 associated with the index value "0" in Table 10A is "4", and an offset between the DMRS port indexes "0" and "4" is 4.

For another example, DMRS port indexes included in the DMRS port index group a1 associated with the index value "2" in Table 3A are "0" and "1", and DMRS port indexes included in the DMRS port index group b1 associated with the index value "2" in Table 10A are "4" and "5". The DMRS port index "0" corresponds to the DMRS port index "4", and an offset between the two DMRS port indexes is 4. The DMRS port index "1" corresponds to the DMRS port index "5", and an offset between the two DMRS port indexes is 4.

### (2) Double-symbol DMRS of the configuration type 1

For eight existing DMRS port indexes (namely, "0 to 7") corresponding to the double-symbol DMRS of the configuration type 1, a case of one codeword in Table 4A is used as an example (for Table 4B, refer to Table 4A). The eight DMRS port indexes correspond to a set 3, and the set 3 includes 19 DMRS port index groups associated with index values "12 to 30" in Table 4A.

For eight newly added DMRS port indexes (namely, "8 to 15") corresponding to the double-symbol DMRS of the configuration type 1, a case of one codeword in Table 11A is used as an example (for Table 11B, refer to Table 11A). In the example of the case of one codeword, the eight DMRS port indexes correspond to a set 4, and the set 4 may include 19 DMRS port index groups associated with index values "12 to 30" in Table 11A. The DMRS port index group included in the set 4 and the DMRS port index group included in the set 3 have the first association relationship.

**Table 11A: Configuration type 1, a maximum symbol length occupied by a DMRS port (a newly added DMRS port) is 2**

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 0 | 1 | 4 | 1 | 0 | 2 | 8-12 | 2 |
| 1 | 1 | 5 | 1 | 1 | 2 | 8, 9, 10, 11, 12, 14 | 2 |
| 2 | 1 | 4, 5 | 1 | 2 | 2 | 8, 9, 10, 11, 12, 13, 14 | 2 |
| 3 | 2 | 4 | 1 | 3 | 2 | 8, 9, 10, 11, 12, 13, 14, 15 | 2 |
| 4 | 2 | 5 | 1 | 4-31 | Reserved | Reserved | Reserved |
| 5 | 2 | 6 | 1 | | | | |
| 6 | 2 | 7 | 1 | | | | |
| 7 | 2 | 4, 5 | 1 | | | | |
| 8 | 2 | 6, 7 | 1 | | | | |
| 9 | 2 | 4-6 | 1 | | | | |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 10 | 2 | 4-7 | 1 | | | | |
| 11 | 2 | 4, 6 | 1 | | | | |
| 12 | 2 | 8 | 2 | | | | |
| 13 | 2 | 9 | 2 | | | | |
| 14 | 2 | 10 | 2 | | | | |
| 15 | 2 | 11 | 2 | | | | |
| 16 | 2 | 12 | 2 | | | | |
| 17 | 2 | 13 | 2 | | | | |
| 18 | 2 | 14 | 2 | | | | |
| 19 | 2 | 15 | 2 | | | | |
| 20 | 2 | 8, 9 | 2 | | | | |
| 21 | 2 | 10, 11 | 2 | | | | |
| 22 | 2 | 12, 13 | 2 | | | | |
| 23 | 2 | 14, 15 | 2 | | | | |
| 24 | 2 | 8, 12 | 2 | | | | |
| 25 | 2 | 10, 14 | 2 | | | | |
| 26 | 2 | 8, 9, 12 | 2 | | | | |
| 27 | 2 | 10, 11, 14 | 2 | | | | |
| 28 | 2 | 8, 9, 12, 13 | 2 | | | | |
| 29 | 2 | 10, 11, 14, 15 | 2 | | | | |
| 30 | 2 | 8, 10, 12, 14 | 2 | | | | |
| 31 | Reserved | Reserved | Reserved | | | | |

**Table 11B: Configuration type 1, a maximum symbol length occupied by a DMRS port (a newly added DMRS port) is 2**

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 0 | 1 | 4 | 1 | 0 | 2 | 8-12 | 2 |
| 1 | 1 | 5 | 1 | 1 | 2 | 8, 9, 10, 11, 12, 14 | 2 |
| 2 | 1 | 4, 5 | 1 | 2 | 2 | 8, 9, 10, 11, 12, 13, 14 | 2 |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 3 | 2 | 4 | 1 | 3 | 2 | 8, 9, 10, 11, 12, 13, 14, 15 | 2 |
| 4 | 2 | 5 | 1 | 4-31 | Reserved | Reserved | Reserved |
| 5 | 2 | 6 | 1 | | | | |
| 6 | 2 | 7 | 1 | | | | |
| 7 | 2 | 4, 5 | 1 | | | | |
| 8 | 2 | 6, 7 | 1 | | | | |
| 9 | 2 | 4-6 | 1 | | | | |
| 10 | 2 | 4-7 | 1 | | | | |
| 11 | 2 | 4, 6 | 1 | | | | |
| 12 | 2 | 8 | 2 | | | | |
| 13 | 2 | 9 | 2 | | | | |
| 14 | 2 | 10 | 2 | | | | |
| 15 | 2 | 11 | 2 | | | | |
| 16 | 2 | 12 | 2 | | | | |
| 17 | 2 | 13 | 2 | | | | |
| 18 | 2 | 14 | 2 | | | | |
| 19 | 2 | 15 | 2 | | | | |
| 20 | 2 | 8, 9 | 2 | | | | |
| 21 | 2 | 10, 11 | 2 | | | | |
| 22 | 2 | 12, 13 | 2 | | | | |
| 23 | 2 | 14, 15 | 2 | | | | |
| 24 | 2 | 8, 12 | 2 | | | | |
| 25 | 2 | 10, 14 | 2 | | | | |
| 26 | 2 | 8, 9, 12 | 2 | | | | |
| 27 | 2 | 10, 11, 14 | 2 | | | | |
| 28 | 2 | 8, 9, 12, 13 | 2 | | | | |
| 29 | 2 | 10, 11, 14, 15 | 2 | | | | |
| 30 | 2 | 8, 10, 12, 14 | 2 | | | | |
| 31 | 2 | 8, 10, 11 | 1 | | | | |

Table 11A corresponds to Table 4A, and Table 11B corresponds to Table 4B. Table 11A and Table 4A are used as an example. The set 3 includes a DMRS port index group a2, and the DMRS port index group a2 is any one of the 19 DMRS port index groups shown in Table 4A. The set 4 includes a DMRS port index group b2, and the DMRS port index group b2 is any one of the 19 DMRS port index groups shown in Table 11A. The DMRS port index group a2 and the DMRS port index group b2 have the first association relationship. Specifically, the DMRS port index group a2 and the DMRS port index group b2 are associated with a same index value, there is a one-to-one correspondence between port indexes in the DMRS port index group a2 and port indexes in the DMRS port index group b2, and there is an offset between corresponding port indexes.

A value of the offset may be determined based on a configuration type and a symbol length occupied by a DMRS port. When the configuration type is the configuration type 1 and the symbol length occupied by the DMRS port is 2, the value of the offset may be 8. That is, the value of the offset may be equal to a quantity of DMRS port indexes corresponding to the set 3, or the value of the offset may be equal to a maximum quantity of orthogonal DMRS ports supported by the double-symbol DMRS of the configuration type 1.

A case of one codeword is used as an example. For example, a DMRS port index included in the DMRS port index group a2 associated with the index value "12" in Table 4A is "0", a DMRS port index included in the DMRS port index group b2 associated with the index value "12" in Table 11A is "8", and an offset between the DMRS port indexes "0" and "8" is 8.

For another example, DMRS port indexes included in the DMRS port index group a2 associated with the index value "20" in Table 4A are "0" and "1", and DMRS port indexes included in the DMRS port index group b2 associated with the index value "20" in Table 11A are "8" and "9". The DMRS port index "0" corresponds to the DMRS port index "8", and an offset between the two DMRS port indexes is 8. The DMRS port index "1" corresponds to the DMRS port index "9", and an offset between the two DMRS port indexes is 8.

### (3) Single-symbol DMRS of the configuration type 2

For six existing DMRS port indexes (namely, "0 to 5") corresponding to the single-symbol DMRS of the configuration type 2, a case of one codeword in Table 5A is used as an example (for Table 5B, refer to Table 5A). The five DMRS port indexes correspond to a set 5, and the set 5 includes 24 DMRS port index groups associated with index values "0 to 23" in Table 5A.

For six newly added DMRS port indexes (namely, "6 to 11") corresponding to the single-symbol DMRS of the configuration type 1, a case of one codeword in Table 12A is used as an example (for Table 12B, refer to Table 12A). The six DMRS port indexes correspond to a set 6, and the set 6 may include 24 DMRS port index groups associated with index values "0 to 23" in Table 12A. The DMRS port index group included in the set 6 and the DMRS port index group included in the set 5 have the first association relationship.

**Table 12A: Configuration type 2, a maximum symbol length occupied by a DMRS port (a newly added DMRS port) is 1**

| One codeword: A codeword 0 is enabled, and a codeword 1 is disabled | | | Two codewords: The codeword 0 is enabled, and the codeword 1 is enabled | | |
|---|---|---|---|---|---|
| Index value | Quantity of CDM groups without data | DMRS port index | Index value | Quantity of CDM groups without data | DMRS port index |
| 0 | 1 | 6 | 0 | 3 | 6-10 |
| 1 | 1 | 7 | 1 | 3 | 6-11 |
| 2 | 1 | 6, 7 | 2-31 | Reserved | Reserved |
| 3 | 2 | 6 | | | |
| 4 | 2 | 7 | | | |
| 5 | 2 | 8 | | | |
| 6 | 2 | 9 | | | |
| 7 | 2 | 6, 7 | | | |
| 8 | 2 | 8, 9 | | | |
| 9 | 2 | 6-8 | | | |
| 10 | 2 | 6-9 | | | |
| 11 | 3 | 6 | | | |
| 12 | 3 | 7 | | | |
| 13 | 3 | 8 | | | |
| 14 | 3 | 9 | | | |
| 15 | 3 | 10 | | | |

(continued)

| One codeword: A codeword 0 is enabled, and a codeword 1 is disabled | | | Two codewords: The codeword 0 is enabled, and the codeword 1 is enabled | | |
|---|---|---|---|---|---|
| Index value | Quantity of CDM groups without data | DMRS port index | Index value | Quantity of CDM groups without data | DMRS port index |
| 16 | 3 | 11 | | | |
| 17 | 3 | 6, 7 | | | |
| 18 | 3 | 8, 9 | | | |
| 19 | 3 | 10, 11 | | | |
| 20 | 3 | 6-8 | | | |
| 21 | 3 | 9-11 | | | |
| 22 | 3 | 6-9 | | | |
| 23 | 2 | 6, 8 | | | |
| 24-31 | Reserved | Reserved | | | |

**Table 12B: Configuration type 2, a maximum symbol length occupied by a DMRS port (a newly added DMRS port) is 1**

| One codeword: A codeword 0 is enabled, and a codeword 1 is disabled | | | Two codewords: The codeword 0 is enabled, and the codeword 1 is enabled | | |
|---|---|---|---|---|---|
| Index value | Quantity of CDM groups without data | DMRS port index | Index value | Quantity of CDM groups without data | DMRS port index |
| 0 | 1 | 6 | 0 | 3 | 6-10 |
| 1 | 1 | 7 | 1 | 3 | 6-11 |
| 2 | 1 | 6, 7 | 2-31 | Reserved | Reserved |
| 3 | 2 | 6 | | | |
| 4 | 2 | 7 | | | |
| 5 | 2 | 8 | | | |
| 6 | 2 | 9 | | | |
| 7 | 2 | 6, 7 | | | |
| 8 | 2 | 8, 9 | | | |
| 9 | 2 | 6-8 | | | |
| 10 | 2 | 6-9 | | | |
| 11 | 3 | 6 | | | |
| 12 | 3 | 7 | | | |
| 13 | 3 | 8 | | | |
| 14 | 3 | 9 | | | |
| 15 | 3 | 10 | | | |
| 16 | 3 | 11 | | | |
| 17 | 3 | 6, 7 | | | |
| 18 | 3 | 8, 9 | | | |
| 19 | 3 | 10, 11 | | | |
| 20 | 3 | 6-8 | | | |
| 21 | 3 | 9-11 | | | |

(continued)

| One codeword: A codeword 0 is enabled, and a codeword 1 is disabled | | | Two codewords: The codeword 0 is enabled, and the codeword 1 is enabled | | |
|---|---|---|---|---|---|
| Index value | Quantity of CDM groups without data | DMRS port index | Index value | Quantity of CDM groups without data | DMRS port index |
| 22 | 3 | 6-9 | | | |
| 23 | 2 | 6, 8 | | | |
| 24 | 2 | 6, 8, 9 | | | |
| 25-31 | Reserved | Reserved | | | |

Table 12A corresponds to Table 5A, and Table 12B corresponds to Table 5B. Table 12A and Table 5A are used as an example. The set 5 includes a DMRS port index group a3, and the DMRS port index group a3 is any one of the 24 DMRS port index groups shown in Table 5A. The set 6 includes a DMRS port index group b3, and the DMRS port index group b3 is any one of the 24 DMRS port index groups shown in Table 12A. The DMRS port index group a3 and the DMRS port index group b3 have the first association relationship. Specifically, the DMRS port index group a3 and the DMRS port index group b3 are associated with a same index value, there is a one-to-one correspondence between port indexes in the DMRS port index group a3 and port indexes in the DMRS port index group b3, and there is an offset between corresponding port indexes.

A value of the offset may be determined based on a configuration type and a symbol length occupied by a DMRS port. When the configuration type is the configuration type 2 and the symbol length occupied by the DMRS port is 1, the value of the offset may be 6. That is, the value of the offset may be equal to a quantity of DMRS port indexes corresponding to the set 5, or the value of the offset may be equal to a maximum quantity of orthogonal DMRS ports supported by the single-symbol DMRS of the configuration type 2.

A case of one codeword is used as an example. For example, a DMRS port index included in the DMRS port index group a3 associated with the index value "0" in Table 5A is "0", a DMRS port index included in the DMRS port index group b3 associated with the index value "0" in Table 12A is "6", and an offset between the DMRS port indexes "0" and "6" is 6.

For another example, DMRS port indexes included in the DMRS port index group a3 associated with the index value "2" in Table 5A are "0" and "1", and DMRS port indexes included in the DMRS port index group b3 associated with the index value "2" in Table 12A are "6" and "7". The DMRS port index "0" corresponds to the DMRS port index "6", and an offset between the two DMRS port indexes is 6. The DMRS port index "1" corresponds to the DMRS port index "7", and an offset between the two DMRS port indexes is 6.

## (4) Double-symbol DMRS of the configuration type 2

For 12 existing DMRS port indexes (namely, "0 to 11") corresponding to the double-symbol DMRS of the configuration type 2, a case of one codeword in Table 6A is used as an example (for Table 6B, refer to Table 6A). The 12 DMRS port indexes correspond to a set 7, and the set 7 includes 34 DMRS port index groups associated with index values "24 to 57" in Table 4A.

For eight newly added DMRS port indexes (namely, "12 to 23") corresponding to the double-symbol DMRS of the configuration type 2, a case of one codeword in Table 13A is used as an example (for Table 13B, refer to Table 13A). The 12 DMRS port indexes correspond to a set 8, and the set 8 may include 34 DMRS port index groups associated with index values "24 to 57" in Table 13A. The DMRS port index group included in the set 8 and the DMRS port index group included in the set 7 have the first association relationship.

**Table 13A: Configuration type 2, a maximum symbol length occupied by a DMRS port (a newly added DMRS port) is 2**

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 0 | 1 | 6 | 1 | 0 | 3 | 6-10 | 1 |
| 1 | 1 | 7 | 1 | 1 | 3 | 6-11 | 1 |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 2 | 1 | 6, 7 | 1 | 2 | 2 | 12, 13, 14, 15, 18 | 2 |
| 3 | 2 | 6 | 1 | 3 | 2 | 12, 13, 14, 15, 18, 20 | 2 |
| 4 | 2 | 7 | 1 | 4 | 2 | 12, 13, 14, 15, 18, 19, 20 | 2 |
| 5 | 2 | 8 | 1 | 5 | 2 | 12, 13, 14, 15, 18, 19, 20, 21 | 2 |
| 6 | 2 | 9 | 1 | 6-63 | Reserved | Reserved | Reserved |
| 7 | 2 | 6, 7 | 1 | | | | |
| 8 | 2 | 8, 9 | 1 | | | | |
| 9 | 2 | 6-8 | 1 | | | | |
| 10 | 2 | 6-9 | 1 | | | | |
| 11 | 3 | 6 | 1 | | | | |
| 12 | 3 | 7 | 1 | | | | |
| 13 | 3 | 8 | 1 | | | | |
| 14 | 3 | 9 | 1 | | | | |
| 15 | 3 | 10 | 1 | | | | |
| 16 | 3 | 11 | 1 | | | | |
| 17 | 3 | 6, 7 | 1 | | | | |
| 18 | 3 | 8, 9 | 1 | | | | |
| 19 | 3 | 10, 11 | 1 | | | | |
| 20 | 3 | 6-8 | 1 | | | | |
| 21 | 3 | 9-11 | 1 | | | | |
| 22 | 3 | 6-9 | 1 | | | | |
| 23 | 2 | 6, 8 | 1 | | | | |
| 24 | 3 | 12 | 2 | | | | |
| 25 | 3 | 13 | 2 | | | | |
| 26 | 3 | 14 | 2 | | | | |
| 27 | 3 | 15 | 2 | | | | |
| 28 | 3 | 16 | 2 | | | | |
| 29 | 3 | 17 | 2 | | | | |
| 30 | 3 | 18 | 2 | | | | |
| 31 | 3 | 19 | 2 | | | | |
| 32 | 3 | 20 | 2 | | | | |
| 33 | 3 | 21 | 2 | | | | |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 34 | 3 | 22 | 2 | | | | |
| 35 | 3 | 23 | 2 | | | | |
| 36 | 3 | 12, 13 | 2 | | | | |
| 37 | 3 | 14, 15 | 2 | | | | |
| 38 | 3 | 16, 17 | 2 | | | | |
| 39 | 3 | 18, 19 | 2 | | | | |
| 40 | 3 | 20, 21 | 2 | | | | |
| 41 | 3 | 22, 23 | 2 | | | | |
| 42 | 3 | 12, 13, 18 | 2 | | | | |
| 43 | 3 | 14, 15, 20 | 2 | | | | |
| 44 | 3 | 16, 17, 22 | 2 | | | | |
| 45 | 3 | 12, 13, 18, 19 | 2 | | | | |
| 46 | 3 | 14, 15, 20, 21 | 2 | | | | |
| 47 | 3 | 16, 17, 22, 23 | 2 | | | | |
| 48 | 1 | 12 | 2 | | | | |
| 49 | 1 | 13 | 2 | | | | |
| 50 | 1 | 18 | 2 | | | | |
| 51 | 1 | 19 | 2 | | | | |
| 52 | 1 | 12, 13 | 2 | | | | |
| 53 | 1 | 18, 19 | 2 | | | | |
| 54 | 2 | 12, 13 | 2 | | | | |
| 55 | 2 | 14, 15 | 2 | | | | |
| 56 | 2 | 18, 19 | 2 | | | | |
| 57 | 2 | 20, 21 | 2 | | | | |
| 58-63 | Reserved | Reserved | Reserved | | | | |

**Table 13B: Configuration type 2, a maximum symbol length occupied by a DMRS port (a newly added DMRS port) is 2**

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 0 | 1 | 6 | 1 | 0 | 3 | 6-10 | 1 |
| 1 | 1 | 7 | 1 | 1 | 3 | 6-11 | 1 |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 2 | 1 | 6, 7 | 1 | 2 | 2 | 12, 13, 14, 15, 18 | 2 |
| 3 | 2 | 6 | 1 | 3 | 2 | 12, 13, 14, 15, 18, 20 | 2 |
| 4 | 2 | 7 | 1 | 4 | 2 | 12, 13, 14, 15, 18, 19, 20 | 2 |
| 5 | 2 | 8 | 1 | 5 | 2 | 12, 13, 14, 15, 18, 19, 20, 21 | 2 |
| 6 | 2 | 9 | 1 | 6-63 | Reserved | Reserved | Reserved |
| 7 | 2 | 6, 7 | 1 | | | | |
| 8 | 2 | 8, 9 | 1 | | | | |
| 9 | 2 | 6-8 | 1 | | | | |
| 10 | 2 | 6-9 | 1 | | | | |
| 11 | 3 | 6 | 1 | | | | |
| 12 | 3 | 7 | 1 | | | | |
| 13 | 3 | 8 | 1 | | | | |
| 14 | 3 | 9 | 1 | | | | |
| 15 | 3 | 10 | 1 | | | | |
| 16 | 3 | 11 | 1 | | | | |
| 17 | 3 | 6, 7 | 1 | | | | |
| 18 | 3 | 8, 9 | 1 | | | | |
| 19 | 3 | 10, 11 | 1 | | | | |
| 20 | 3 | 6-8 | 1 | | | | |
| 21 | 3 | 9-11 | 1 | | | | |
| 22 | 3 | 6-9 | 1 | | | | |
| 23 | 2 | 6, 8 | 1 | | | | |
| 24 | 3 | 12 | 2 | | | | |
| 25 | 3 | 13 | 2 | | | | |
| 26 | 3 | 14 | 2 | | | | |
| 27 | 3 | 15 | 2 | | | | |
| 28 | 3 | 16 | 2 | | | | |
| 29 | 3 | 17 | 2 | | | | |
| 30 | 3 | 18 | 2 | | | | |
| 31 | 3 | 19 | 2 | | | | |
| 32 | 3 | 20 | 2 | | | | |
| 33 | 3 | 21 | 2 | | | | |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 34 | 3 | 22 | 2 | | | | |
| 35 | 3 | 23 | 2 | | | | |
| 36 | 3 | 12, 13 | 2 | | | | |
| 37 | 3 | 14, 15 | 2 | | | | |
| 38 | 3 | 16, 17 | 2 | | | | |
| 39 | 3 | 18, 19 | 2 | | | | |
| 40 | 3 | 20, 21 | 2 | | | | |
| 41 | 3 | 22, 23 | 2 | | | | |
| 42 | 3 | 12, 13, 18 | 2 | | | | |
| 43 | 3 | 14, 15, 20 | 2 | | | | |
| 44 | 3 | 16, 17, 22 | 2 | | | | |
| 45 | 3 | 12, 13, 18, 19 | 2 | | | | |
| 46 | 3 | 14, 15, 20, 21 | 2 | | | | |
| 47 | 3 | 16, 17, 22, 23 | 2 | | | | |
| 48 | 1 | 12 | 2 | | | | |
| 49 | 1 | 13 | 2 | | | | |
| 50 | 1 | 18 | 2 | | | | |
| 51 | 1 | 19 | 2 | | | | |
| 52 | 1 | 12, 13 | 2 | | | | |
| 53 | 1 | 18, 19 | 2 | | | | |
| 54 | 2 | 12, 13 | 2 | | | | |
| 55 | 2 | 14, 15 | 2 | | | | |
| 56 | 2 | 18, 19 | 2 | | | | |
| 57 | 2 | 20, 21 | 2 | | | | |
| 58 | 2 | 12, 14, 15 | 1 | | | | |
| 59-63 | Reserved | Reserved | Reserved | | | | |

Table 13A corresponds to Table 6A, and Table 13B corresponds to Table 6B. Table 13A and Table 6A are used as an example. The set 7 includes a DMRS port index group a4, and the DMRS port index group a4 is any one of the 34 DMRS port index groups shown in Table 6A. The set 8 includes a DMRS port index group b4, and the DMRS port index group b4 is any one of the 34 DMRS port index groups shown in Table 13A. The DMRS port index group a4 and the DMRS port index group b4 have the first association relationship. Specifically, the DMRS port index group a4 and the DMRS port index group b4 are associated with a same index value, there is a one-to-one correspondence between port indexes in the DMRS port index group a4 and port indexes in the DMRS port index group b4, and there is an offset between corresponding port indexes.

A value of the offset may be determined based on a configuration type and a symbol length occupied by a DMRS port. When the configuration type is the configuration type 2 and the symbol length occupied by the DMRS port is 2, the value of the offset may be 12. That is, the value of the offset may be equal to a quantity of DMRS port indexes corresponding to the set 7, or the value of the offset may be equal to a maximum quantity of orthogonal DMRS ports supported by the double-symbol DMRS of the configuration type 2.

A case of one codeword is used as an example. For example, a DMRS port index included in the DMRS port index group a4 associated with the index value "24" in Table 6A is "0", a DMRS port index included in the DMRS port index group b4 associated with the index value "24" in Table 13A is "12", and an offset between the DMRS port indexes "0" and "12" is 12.

For another example, DMRS port indexes included in the DMRS port index group a4 associated with the index value "36" in Table 6A are "0" and "1", and DMRS port indexes included in the DMRS port index group b4 associated with the index value "36" in Table 13A are "12" and "13". The DMRS port index "0" corresponds to the DMRS port index "12", and an offset between the two DMRS port indexes is 12. The DMRS port index "1" corresponds to the DMRS port index "13", and an offset between the two DMRS port indexes is 12.

## 2. Second association relationship

The following describes a case of the single-symbol DMRS of the configuration type 1. For other cases, refer to the descriptions herein. Details are not described again.

For four existing DMRS port indexes (namely, "0 to 3") corresponding to the single-symbol DMRS of the configuration type 1, Table 3A is used as an example (for Table 3B, refer to Table 3A). The four DMRS port indexes correspond to a set 1, and the set 1 may include 12 DMRS port index groups associated with index values "0 to 11" in Table 3A.

After DMRS port expansion, the single-symbol DMRS of the configuration type 1 may correspond to eight DMRS port indexes ("0 to 7", where "0 to 3" are existing DMRS port indexes, and "4 to 7" are newly added DMRS port indexes). Table 14A is used as an example (for Table 14B, refer to Table 14A). The eight DMRS port indexes correspond to a set 2, and the set 2 may include 12 DMRS port index groups associated with index values "0 to 11" in Table 14A. The DMRS port index group included in the set 2 and the DMRS port index group included in the set 1 have the second association relationship.

**Table 14A: Configuration type 1, a maximum symbol length occupied by a DMRS port is 1**

| One codeword: A codeword 0 is enabled, and a codeword 1 is disabled | | |
|---|---|---|
| Index value | Quantity of CDM groups without data | DMRS port index |
| 0 | 1 | 0, 4 |
| 1 | 1 | 1, 5 |
| 2 | 1 | 0, 1, 4, 5 |
| 3 | 2 | 0, 4 |
| 4 | 2 | 1, 5 |
| 5 | 2 | 2, 6 |
| 6 | 2 | 3, 7 |
| 7 | 2 | 0, 1, 4, 5 |
| 8 | 2 | 2, 3, 6, 7 |
| 9 | 2 | 0-2, 4-6 |
| 10 | 2 | 0-3, 4-7 |
| 11 | 2 | 0, 2, 4, 6 |
| 12-15 | Reserved | Reserved |

**Table 14B: Configuration type 1, a maximum symbol length occupied by a DMRS port is 1**

| One codeword: A codeword 0 is enabled, and a codeword 1 is disabled | | |
|---|---|---|
| Index value | Quantity of CDM groups without data | DMRS port index |
| 0 | 1 | 0, 4 |

(continued)

| One codeword: A codeword 0 is enabled, and a codeword 1 is disabled | | |
|---|---|---|
| Index value | Quantity of CDM groups without data | DMRS port index |
| 1 | 1 | 1, 5 |
| 2 | 1 | 0, 1, 4, 5 |
| 3 | 2 | 0, 4 |
| 4 | 2 | 1, 5 |
| 5 | 2 | 2, 6 |
| 6 | 2 | 3, 7 |
| 7 | 2 | 0, 1, 4, 5 |
| 8 | 2 | 2, 3, 6, 7 |
| 9 | 2 | 0-2, 4-6 |
| 10 | 2 | 0-3, 4-7 |
| 11 | 2 | 0, 2, 4, 6 |
| 12 | 2 | 0, 2, 3, 4, 6, 7 |
| 13-15 | Reserved | Reserved |

Table 14A corresponds to Table 3A, and Table 14B corresponds to Table 3B. Table 14A and Table 3A are used as an example. For example, the set 1 includes a DMRS port index group a1, and the DMRS port index group a1 is any one of the 12 DMRS port index groups shown in Table 3A. The set 2 includes a DMRS port index group b1, and the DMRS port index group b1 is any one of the 12 DMRS port index groups shown in Table 14A. The DMRS port index group a1 and the DMRS port index group b1 have the second association relationship. Specifically, the DMRS port index group a1 and the DMRS port index group b1 are associated with a same index value, and the DMRS port index group a1 is a subset of the DMRS port index group b1. The DMRS port index group b1 includes the DMRS port index group a1, and further includes a DMRS port index corresponding to a DMRS port index in the DMRS port index group a1, and there is an offset between two corresponding DMRS port indexes. A value of the offset may be determined based on a configuration type and a symbol length occupied by a DMRS port. When the configuration type is the configuration type 1, and the symbol length occupied by the DMRS port is 1, the value of the offset may be 4.

For example, a DMRS port index included in the DMRS port index group a1 associated with the index value "0" in Table 3A is "0", DMRS port indexes included in the DMRS port index group b1 associated with the index value "0" in Table 14A are "0" and "4", and an offset between the DMRS port indexes "0" and "4" is 4.

For another example, DMRS port indexes included in the DMRS port index group a1 associated with the index value "2" in Table 3A are "0" and "1", and DMRS port indexes included in the DMRS port index group b1 associated with the index value "2" in Table 14A are "0", "1", "4", and "5". The DMRS port index "0" corresponds to the DMRS port index "4", and an offset between the two DMRS port indexes is 4. The DMRS port index "1" corresponds to the DMRS port index "5", and an offset between the two DMRS port indexes is 4.

It may be understood that all tables (for example, Table 1 to Table 14B) in embodiments of this application may be defined by a protocol.

The following describes a communication method in an embodiment of this application with reference to FIG. 6.

FIG. 6 is a schematic flowchart corresponding to a communication method according to an embodiment of this application. As shown in FIG. 6, the method may include the following steps.

S601: An access network device sends first indication information to a terminal device. Correspondingly, the terminal device may receive the first indication information.

For example, the first indication information may indicate a first index value, and the first index value may be associated with a first port index group in a plurality of port index groups included in a first set and a second port index group in a plurality of port index groups included in a second set. In other words, the first port index group and the second port index group are associated with a same index value.

For example, the first indication information may be carried in a MAC CE or DCI. When the first indication information is carried in the DCI, a format (format) used by the DCI may be, for example, a DCI format 0_1, DCI format 0_2, a DCI format 1_1, or a DCI format 1_2.

S602: The access network device sends second indication information to the terminal device, where the second indication information indicates a first value or a second value. Correspondingly, the terminal device may receive the second indication information.

When the second indication information indicates the first value, the first indication information indicates the first port index group to the terminal device by using the first index value. In this case, a port index allocated by the access network device to the terminal device is a port index in the first port index group. When the second indication information indicates the second value, the first indication information indicates the second port index group to the terminal device by using the first index value. In this case, a port index allocated by the access network device to the terminal device is a port index in the second port index group.

The following describes two possible implementations with reference to Implementation 1 and Implementation 2.

## (1) Implementation 1

In Implementation 1, the second indication information may be carried in an RRC message. For example, the second indication information may be a dmrs-Type field in the RRC message. The first value indicates an existing DMRS port corresponding to a configuration type 1, and the second value indicates a newly added DMRS port corresponding to the configuration type 1. For example, the first value may be "type1", and the second value may be "type1-E". Alternatively, the first value indicates an existing DMRS port corresponding to a configuration type 2, and the second value indicates a newly added DMRS port corresponding to the configuration type 2. For example, the first value may be "type2", and the second value may be "type2-E". In other words, the second indication information may indicate any one of type1, type2, type1-E, and type2-E.

For example, the access network device may further send fourth indication information to the terminal device. The fourth indication information indicates a maximum symbol length occupied by a reference signal (for example, a DMRS). For example, the maximum symbol length may be a length 1 (len1) or a length 2 (len2), the length 1 may be one symbol, and the length 2 may be two symbols. The fourth indication information may be carried in an RRC message. For example, the fourth indication information may be a maxLength field in the RRC message. The fourth indication information and the second indication information may be carried in a same message, or may be carried in different messages. When the fourth indication information and the second indication information are carried in different messages, a sequence in which the access network device sends the different messages is not limited in this embodiment of this application.

For example, the fourth indication information and the second indication information are carried in a same RRC message. A possible signaling structure of the RRC message is shown as follows:

```
DMRS-DownlinkConfig ::=                SEQUENCE {
    dmrs-Type ENUMERATED{type1, type2, type1-E, type2-E}//indicates any one of type1,
type2, type1-E, and type2-E
OPTIONAL,      -- Need S
  maxLength           ENUMERATED{ len1, len2}//indicates a maximum symbol length is len1
or len2
OPTIONAL,      -- Need S
...
}
```

## (2) Implementation 2

In Implementation 2, the second indication information may be carried in a MAC CE or DCI. The second indication information and the first indication information may be carried in a same message, or may be carried in different messages. This is not limited. The first value indicates an existing DMRS port, and the second value indicates a newly added DMRS port. For example, the second indication information includes one bit. When a value of the bit is "0", the bit indicates an existing DMRS port. When a value of the bit is "1", the bit indicates a newly added DMRS port.

For example, the access network device may further send fourth indication information and fifth indication information to the terminal device. The fourth indication information indicates a maximum symbol length occupied by a reference signal (for example, a DMRS), and the fifth indication information indicates a configuration type of the reference signal (for example, the DMRS). For example, the fifth indication information may indicate "type1" or "type2". The fifth indication information may be carried in an RRC message. For example, the fifth indication information may be a dmrs-Type field in the RRC message. The fourth indication information and the fifth indication information may be carried in a same message, or may be carried in different messages.

When the fourth indication information and the fifth indication information are carried in a same RRC message, a possible signaling structure of the RRC message is shown as follows:

DMRS-DownlinkConfig ::=                  SEQUENCE {

    dmrs-Type ENUMERATED{type1, type2}// indicates type1 or type2

OPTIONAL,      -- Need S

  maxLength            ENUMERATED{ len1, len2}//indicates a maximum symbol length is len1 or len2

OPTIONAL,      -- Need S

...

}

The following describes two possible cases based on Implementation 1 by using an example in which the first port index group and the second port index group have a first association relationship.

Case 1: The second indication information indicates "type1" or "type1-E".

When the second indication information indicates the first value, for example, the second indication information indicates "type1", the terminal device may determine, based on the second indication information, that the first indication information indicates the first port index group in the first set. When the second indication information indicates the second value, for example, the second indication information indicates "type1-E", the terminal device may determine, based on the second indication information, that the first indication information indicates the second port index group in the second set.

**(1) The maximum symbol length occupied by the DMRS port is 1.**

When the maximum symbol length occupied by the DMRS port is 1, for example, the first index value indicated by the first indication information is "2", if the second indication information indicates "type1", the terminal device may determine, based on the second indication information, that the first indication information indicates the first port index group in the first set, and port indexes included in the first port index group are "0" and "1". If the second indication information indicates "type1-E", the terminal device may determine, based on the second indication information, that the first indication information indicates the second port index group in the second set, and port indexes included in the second port index group are "4" and "5" .

The terminal device may determine, in a plurality of manners, a port index group indicated by the first indication information, for example, Manner 1 and Manner 2.

(1.1) Manner 1

The plurality of port index groups included in the first set are shown in Table 3A, and the plurality of port index groups included in the second set are shown in Table 10A; or the plurality of port index groups included in the first set are shown in Table 3B, and the plurality of port index groups included in the second set are shown in Table 10B.

When the second indication information indicates "type1", the terminal device may determine that a table that needs to be looked up is Table 3A (Table 3A is used as an example herein, and for Table 3B, refer to Table 3A). When the first index value indicated by the first indication information is "2", the terminal device may determine, based on the first index value and Table 3A, that the first indication information indicates the first port index group, and port indexes included in the first port index group are "0" and "1".

When the second indication information indicates "type1-E", the terminal device may determine that a table that needs to be looked up is Table 10A (Table 10A is used as an example herein, and for Table 10B, refer to Table 10A). When the first index value indicated by the first indication information is "2", the terminal device may determine, based on the first index value and Table 10A, that the first indication information indicates the second port index group, and port indexes included in the second port index group are "4" and "5".

In Manner 1, after a newly added DMRS port is introduced, when a port allocated by the access network device to the terminal device is the newly added DMRS port, the port allocated by the access network device to the terminal device may be determined by looking up a table corresponding to the newly added DMRS port. Because the table corresponding to the newly added DMRS port may be designed with reference to a table corresponding to an existing DMRS port, implementation complexity can be effectively reduced.

(1.2) Manner 2

The plurality of port index groups included in the first set are shown in Table 3A or Table 3B, and the plurality of port index groups included in the second set are obtained by using port indexes included in the plurality of port index groups in the first port set and an offset.

When the second indication information indicates "type1", the terminal device may determine that a table that needs to be looked up is Table 3A (Table 3A is used as an example herein, and for Table 3B, refer to Table 3A). When the first index value indicated by the first indication information is "2", the terminal device may determine, based on the first index value and Table 3A, that the first indication information indicates the first port index group, and port indexes included in the first port index group are "0" and "1".

When the second indication information indicates "type1-E", and the first index value indicated by the first indication information is "2", the terminal device may determine the first port index group based on the first index value, and port indexes included in the first port index group are "0" and "1". Further, because the first indication information indicates the second port index group in the second set, the terminal device obtains port indexes "4" and "5" in the second port index group based on the port indexes "0" and "1" in the first port index group and the offset (with a value of 4).

In Manner 2, after a newly added DMRS port is introduced, when the port allocated by the access network device to the terminal device is the newly added DMRS port, a table corresponding to the existing DMRS port may be reused, to effectively reduce implementation complexity.

**(2) The maximum symbol length occupied by the DMRS port is 2.**

When the maximum symbol length occupied by the DMRS port is 2, for example, the first index value is "20", if the second indication information indicates "type 1", the terminal device may determine, based on the second indication information, that the first indication information indicates the first port index group in the first set, and port indexes included in the first port index group are "0" and "1". If the second indication information indicates "type1-E", the terminal device may determine, based on the second indication information, that the first indication information indicates the second port index group in the second set, and port indexes included in the second port index group are "4" and "5".

The terminal device may determine, in a plurality of manners, a port index group indicated by the first indication information, for example, Manner 1 and Manner 2.

(2.1) Manner 1

The plurality of port index groups included in the first set are shown in Table 4A, and the plurality of port index groups included in the second set are shown in Table 11A; or the plurality of port index groups included in the first set are shown in Table 4B, and the plurality of port index groups included in the second set are shown in Table 11B.

When the second indication information indicates "type1", the terminal device may determine that a table that needs to be looked up is Table 4A (Table 4A is used as an example herein, and for Table 4B, refer to Table 4A). When the first index value indicated by the first indication information is "20", the terminal device may determine, based on the first index value and Table 4A, that the first indication information indicates the first port index group, and port indexes included in the first port index group are "0" and "1".

When the second indication information indicates "type1-E", the terminal device may determine that a table that needs to be looked up is Table 11A (Table 11A is used as an example herein, and for Table 11B, refer to Table 11A). When the first index value indicated by the first indication information is "20", the terminal device may determine, based on the first index value and Table 11A, that the first indication information indicates the second port index group, and port indexes included in the second port index group are "8" and "9".

(2.2) Manner 2

The plurality of port index groups included in the first set are shown in Table 4A or Table 4B, and the plurality of port index groups included in the second set are obtained by using port indexes included in the plurality of port index groups in the first port set and an offset.

When the second indication information indicates "type1", the terminal device may determine that a table that needs to be looked up is Table 4A (Table 4A is used as an example herein, and for Table 4B, refer to Table 4A). When the first index value indicated by the first indication information is "2", the terminal device may determine, based on the first index value and Table 4A, that the first indication information indicates the first port index group, and port indexes included in the first port index group are "0" and "1".

When the second indication information indicates "type1-E", and the first index value indicated by the first indication information is "2", the terminal device may determine the first port index group based on the first index value, and port indexes included in the first port index group are "0" and "1". Further, because the second indication information indicates the second port index group in the second set, the terminal device obtains port indexes "8" and "9" in the second port index group based on the port indexes "0" and "1" in the first port index group and the offset (with a value of 8).

### Case 2: The second indication information indicates "type2" or "type2-E".

When the second indication information indicates the first value, for example, the second indication information indicates "type2", the terminal device may determine, based on the second indication information, that the first indication information indicates the first port index group in the first set. When the second indication information indicates the second value, for example, the second indication information indicates "type2-E", the terminal device may determine, based on the second indication information, that the first indication information indicates the second port index group in the second set.

### (1) The maximum symbol length occupied by the DMRS port is 1.

When the maximum symbol length occupied by the DMRS port is 1, for example, the first index value indicated by the first indication information is "2", if the second indication information indicates "type2", the terminal device may determine, based on the second indication information, that the first indication information indicates the first port index group in the first set, and port indexes included in the first port index group are "0" and "1". If the second indication information indicates "type2-E", the terminal device may determine, based on the second indication information, that the first indication information indicates the second port index group in the second set, and port indexes included in the second port index group are "6" and "7".

The terminal device may determine, in a plurality of manners, a port index group indicated by the first indication information, for example, Manner 1 and Manner 2.

(1.1) Manner 1

The plurality of port index groups included in the first set are shown in Table 5A, and the plurality of port index groups included in the second set are shown in Table 12A; or the plurality of port index groups included in the first set are shown in Table 5B, and the plurality of port index groups included in the second set are shown in Table 12B.

When the second indication information indicates "type2", the terminal device may determine that a table that needs to be looked up is Table 5A (Table 5A is used as an example herein, and for Table 5B, refer to Table 5A). When the first index value indicated by the first indication information is "2", the terminal device may determine, based on the first index value and Table 5A, that the first indication information indicates the first port index group, and port indexes included in the first port index group are "0" and "1".

When the second indication information indicates "type2-E", the terminal device may determine a table that needs to be looked up. For example, the table that needs to be looked up is Table 12A (Table 12A is used as an example herein, and for Table 12B, refer to Table 12A). When the first index value indicated by the first indication information is "2", the terminal device may determine, based on the first index value and Table 12A, that the first indication information indicates the second port index group, and port indexes included in the second port index group are "6" and "7".

(1.2) Manner 2

The plurality of port index groups included in the first set are shown in Table 5A or Table 5B, and the plurality of port index groups included in the second set are obtained by using port indexes included in the plurality of port index groups in the first port set and an offset.

When the second indication information indicates "type2", the terminal device may determine that a table that needs to be looked up is Table 5A (Table 5A is used as an example herein, and for Table 5B, refer to Table 5A). When the first index value indicated by the first indication information is "2", the terminal device may determine, based on the first index value and Table 5A, that the first indication information indicates the first port index group, and port indexes included in the first port index group are "0" and "1".

When the second indication information indicates "type2-E", and the first index value indicated by the first indication information is "2", the terminal device may determine the first port index group based on the first index value, and port indexes included in the first port index group are "0" and "1". Further, because the second indication information indicates the second port index group in the second set, the terminal device obtains port indexes "6" and "7" in the second port index group based on the port indexes "0" and "1" in the first port index group and the offset (with a value of 6).

### (2) The maximum symbol length occupied by the DMRS port is 2.

When the maximum symbol length occupied by the DMRS port is 2, for example, the first index value is "36", if the second indication information indicates "type2", the terminal device may determine, based on the second indication information, that the first indication information indicates the first port index group in the first set, and port indexes included in the first port index group are "0" and "1". If the second indication information indicates "type2-E", the terminal device may determine, based on the second indication information, that the first indication information indicates the second port index group in the second set, and port indexes included in the second port index group are "12" and "13".

The terminal device may determine, in a plurality of manners, a port index group indicated by the first indication information, for example, Manner 1 and Manner 2.

### (2.1) Manner 1

The plurality of port index groups included in the first set are shown in Table 6A, and the plurality of port index groups included in the second set are shown in Table 13A; or the plurality of port index groups included in the first set are shown in Table 6B, and the plurality of port index groups included in the second set are shown in Table 13B.

When the second indication information indicates "type2", the terminal device may determine a table that needs to be looked up. For example, the table that needs to be looked up is

Table 6A. When the first index value indicated by the first indication information is "36", the terminal device may determine, based on the first index value and Table 6A, that the first indication information indicates the first port index group, and port indexes included in the first port index group are "0" and "1".

When the second indication information indicates "type2-E", the terminal device may determine a table that needs to be looked up. For example, the table that needs to be looked up is

Table 13A. When the first index value indicated by the first indication information is "36", the terminal device may determine, based on the first index value and Table 13A, that the first indication information indicates the second port index group, and port indexes included in the second port index group are "12" and "13".

There may be a plurality of specific implementations in which the terminal device determines the table that needs to be looked up. For example, the terminal device may determine, based on the configuration type, the symbol length occupied by the DMRS port, and other possible information, the table that needs to be looked up.

### (2.2) Manner 2

The plurality of port index groups included in the first set are shown in Table 6A or Table 6B, and the plurality of port index groups included in the second set are obtained by using port indexes included in the plurality of port index groups in the first port set and an offset.

When the second indication information indicates "type2", the terminal device may determine a table that needs to be looked up. For example, the table that needs to be looked up is Table 6A. When the first index value indicated by the first indication information is "36", the terminal device may determine, based on the first index value and Table 6A, that the first indication information indicates the first port index group, and port indexes included in the first port index group are "0" and "1".

When the second indication information indicates "type2-E", and the first index value indicated by the first indication information is "36", the terminal device may determine the first port index group based on the first index value, and port indexes included in the first port index group are "0" and "1". Further, because the second indication information indicates the second port index group in the second set, the terminal device obtains port indexes "12" and "13" in the second port index group based on the port indexes "0" and "1" in the first port index group and the offset (with a value of 12).

It may be understood that the foregoing two cases are described by using an example in which the association relationship between the first port index group and the second port index group is the first association relationship. When the association relationship between the first port index group and the second port index group is the second association relationship, reference may be made to the descriptions herein.

It can be learned from the foregoing descriptions that in the DMRS port indication method provided in this embodiment of this application, by establishing the association relationship between the first port index group and the second port index group, for different values indicated by the second indication information, a DMRS port index group indicated by the first indication information is interpreted differently. Therefore, after DMRS port expansion, indication overheads can be effectively reduced while a DMRS port allocated to the terminal device is indicated.

Further, when the association relationship between the first port index group and the second port index group is the first association relationship, the port indexes in the first port index group may be all existing DMRS port indexes, and the port indexes in the second port index group may be all newly added DMRS port indexes, so that DMRS ports allocated by the access network device to the terminal device do not simultaneously include both an existing DMRS port and a newly added DMRS port, to better ensure channel estimation performance. **Detailed explanation is as follows:**

Generally, after DMRS port expansion, the DMRS ports allocated by the access network device to the terminal device may be all existing ports, or may be all newly added ports, or one part may be existing ports and the other part may be newly added ports. The double-symbol DMRS of the configuration type 1 is used as an example. The DMRS port index allocated by the access network device to the terminal device may include at least one of 0, 1, 2, 3, 4, 5, 6, and 7, or may include at least one of 8, 9, 10, 11, 12, 13, 14, and 15, or may include at least one of 0, 1, 2, 3, 4, 5, 6, and 7 and at least one of 8, 9, 10, 11, 12, 13, 14, and 15. As shown in Table 4A, eight DMRS port indexes (that is, 0 to 7) correspond to 19 DMRS port index groups. After a newly added DMRS port is introduced, 16 DMRS port indexes (that is, 0 to 16) correspond to more DMRS port index groups. Therefore, after the newly added DMRS port is introduced, if the DMRS port indication method described in FIG. 3 is still used, a plurality of other possible DMRS port index groups need to be added to Table 3A to Table 6B. Consequently, implementation is relatively complex. For example, after the plurality of other possible DMRS port index groups are added to Table 3A to Table 6B, an index value also increases correspondingly (a value of the index value is large). Consequently, the access network device needs to indicate the index value to the terminal device by using more bits, and signaling overheads are high.

**For this problem, after analysis, it is found that:**

DMRS symbols corresponding to the existing DMRS ports (for example, the DMRS port 0, the DMRS port 1, the DMRS port 4, and the DMRS port 5) and the newly added DMRS ports (for example, the DMRS port 8, the DMRS port 9, the DMRS port 12, and the DMRS port 13) are mapped to a same time-frequency resource. For the existing DMRS ports, orthogonality of the four DMRS ports is ensured by using $(w_1, w_2, w_3, w_4)$. For the newly added DMRS ports, orthogonality of the four DMRS ports is ensured by using $(c_1, c_2, c_3, c_4)$. Therefore, when the access network device allocates one or more DMRS ports to the terminal device from the existing DMRS ports, it achieves same channel estimation effect as when the access network device allocates one or more DMRS ports to the terminal device from the newly added DMRS ports.

In addition, orthogonality between any two of the existing DMRS ports is ensured by using inner cover code sequences. Therefore, channels corresponding to two subcarriers to which the inner cover code sequences are mapped need to be the same, to ensure orthogonality between the two existing DMRS ports. Similarly, orthogonality between any two of the newly added DMRS ports is ensured by using inner cover code sequences. Therefore, channels corresponding to two subcarriers to which the inner cover code sequences are mapped need to be the same, to ensure orthogonality between the two newly added DMRS ports. However, orthogonality between the existing DMRS port and the newly added DMRS port needs to be further ensured by using an outer cover code sequence. Therefore, channels corresponding to four subcarriers (for example, a subcarrier 0, a subcarrier 2, a subcarrier 4, and a subcarrier 6) to which two adjacent groups of inner cover code sequences are mapped need to be the same, to ensure orthogonality between the existing DMRS port and the newly added DMRS port.

However, as a channel delay spreads or a maximum delay increases, channel frequency selective fading becomes more significant, and a channel coherence bandwidth is further reduced. Consequently, maintaining same channels corresponding to four subcarriers is more difficult than maintaining same channels corresponding to two subcarriers. Therefore, performance is better when the DMRS ports allocated by the access network device to the terminal device are all existing DMRS ports or are all newly added DMRS ports, compared to when a part of the DMRS ports allocated by the access network device to the terminal device are existing DMRS ports and a part of the DMRS ports are newly added DMRS ports.

**Based on the foregoing analysis,** for a terminal device, when the access network device allocates at least one DMRS port to the terminal device from the existing DMRS ports or allocates at least one DMRS port to the terminal device from the newly added DMRS ports, and does not simultaneously allocate an existing DMRS port and a newly added DMRS port to the terminal device, channel estimation performance can be better ensured, and implementation complexity can be effectively reduced.

After the access network device indicates, to the terminal device by using the method in S601 and S602, the DMRS port allocated to the terminal device, the terminal device may send a DMRS (namely, uplink transmission) to the access network device on a time-frequency resource corresponding to the DMRS port, or may receive a DMRS (namely, downlink transmission) from the access network device on a time-frequency resource corresponding to the DMRS port. Whether the terminal device performs uplink transmission or downlink transmission may be indicated by the access network device by using other possible information. This is not limited in this embodiment of this application.

Optionally, when the terminal device receives the DMRS from the access network device on the time-frequency resource corresponding to the DMRS port, the method may further include:

S603: The access network device sends third indication information to the terminal device. Correspondingly, the terminal device receives the third indication information.

For example, the third indication information may be carried in a MAC CE or DCI. The third indication information and the first indication information and/or the second indication information described above may be carried in a same message (for example, a same MAC CE or same DCI), or may be carried in different messages. This is not specifically limited. In other words, the access network device may separately send the first indication information, the second indication information, and the third indication information to the terminal device by using three messages. Alternatively, the access network device may send the first indication information, the second indication information, and the third indication information to the terminal device by using two messages. In this case, any two pieces of the first indication information, the second indication information, and the third indication information may be carried in a same message. Alternatively, the access network device may send the first indication information, the second indication information, and the third indication information to the terminal device by using one message.

The following separately describes the third indication information for the first association relationship and the second association relationship.

**(1) The association relationship between the first port index group and the second port index group is the first association relationship.**

If the association relationship between the first port index group and the second port index group is the first association relationship, there may be the following two possible implementations.

First implementation: When the first indication information indicates the first port index group, the third indication information may indicate whether a port index group in the second set is allocated to another terminal device on a time-frequency resource allocated to the terminal device; or when the first indication information indicates the second port index group, the third indication information may indicate whether a port index group in the first set is allocated to the another terminal device on the time-frequency resource allocated to the terminal device.

For example, the first indication information indicates the first port index group. When the third indication information indicates that the port index group in the second set is allocated to the another terminal device, it indicates that the access network device allocates one port index group in the second set to the another terminal device, or the access network device allocates a plurality of port index groups in the second set to a plurality of other terminal devices respectively. In other words, the access network device may send the third indication information to the terminal device provided that any port index group in the second set is allocated to the another terminal device.

It may be understood that "the third indication information indicates whether the port index group in the second set is allocated to another terminal device on the time-frequency resource allocated to the terminal device" may be replaced with another possible description. For example, it may be replaced with "the third indication information indicates whether the port index group in the second set is allocated to another terminal device during same transmission or scheduling", or may be replaced with "the third indication information indicates that a length of a frequency domain cover code sequence corresponding to the DMRS port allocated to the terminal device is 2 or 4". For other similar descriptions, refer to the descriptions herein.

Second implementation: When the first indication information indicates the first port index group, the third indication information may indicate whether the second port index group is allocated to another terminal device on a time-frequency resource allocated to the terminal device; or when the first indication information indicates the second port index group, the third indication information may indicate whether the first port index group is allocated to the another terminal device on the time-frequency resource allocated to the terminal device.

For example, the first indication information indicates the first port index group. To be specific, when allocating the second port index group in the second set to the another terminal device, the access network device may send the third indication information to the terminal device. When allocating a port index group other than the second port index group in the second set to the another terminal device, the access network device may not send the third indication information to the terminal device.

The following separately describes the first implementation in detail from an access network device side and a terminal device side.

**From a perspective of the access network device:**

When the access network device allocates the first port index group to the terminal device, and does not allocate a port index group in the second set to another terminal device, the access network device may send the third indication information to the terminal device. The third indication information indicates that the port index group in the second set is not allocated to the another terminal device.

When the access network device allocates the first port index group to the terminal device, and allocates a port index group in the second set to the another terminal device, the access network device may perform an operation 1 and/or an operation 2. That the access network device performs the operation 1 may mean that the access network device sends the third indication information to the terminal device. The third indication information indicates that the port index group in the second set is allocated to the another terminal device. That the access network device performs the operation 2 may mean that the access network device cancels interference between paired terminal devices through zero-forcing precoding based on channel information of the paired terminal devices (for example, the terminal device and the another terminal device).

When a plurality of terminal devices schedule same time domain resources (for example, slots), and same or partially same frequency domain resources (for example, physical resource blocks (physical resource block, PRB)), but DMRS ports allocated by the access network device to the plurality of terminal devices are different (for example, the plurality of terminal devices include two terminal devices, and the access network device allocates an existing DMRS port to one of the terminal devices, and allocates a newly added DMRS port to the other terminal device), the plurality of terminal devices may be referred to as a group of paired terminal devices.

**From a perspective of the terminal device:**

The terminal device may determine, in the foregoing manner, the port index allocated by the access network device to the terminal device. For example, the access network device allocates the first port index group in the first set to the terminal device, the first set is the set 3, and a port index included in the first port index group is a DMRS port index "0".

If the third indication information indicates that a port index group in the second set is not allocated to another terminal device, interference of a newly added DMRS port to an existing DMRS port is not generated. Therefore, even if an outer cover code is not considered, DMRS ports allocated by the access network device to the terminal device are orthogonal. Further, when performing channel estimation based on a DMRS corresponding to a DMRS port 0, the terminal device may not need to consider impact of an outer cover code; or in other words, when performing channel estimation based on the DMRS corresponding to the DMRS port 0, the terminal device may perform channel estimation based on a granularity of a frequency domain cover code length of 2; or in other words, when performing channel estimation based on the DMRS corresponding to the DMRS port 0, the terminal device only needs to consider despreading of an inner cover code.

If the third indication information indicates that a DMRS port index group in the second set is allocated to the another terminal device, interference of a newly added DMRS port to an existing DMRS port is generated when only an inner cover code is considered. Therefore, when performing channel estimation based on the DMRS corresponding to the DMRS port 0, the terminal device needs to consider impact of an outer cover code, to reduce interference of the newly added DMRS port to the existing DMRS port; or in other words, when performing channel estimation based on the DMRS corresponding to the DMRS port 0, the terminal device needs to perform channel estimation based on a granularity of a frequency domain cover code length of 4; or in other words, when performing channel estimation based on the DMRS corresponding to the DMRS port 0, the terminal device needs to consider despreading of an inner cover code and an outer cover code.

It may be understood that the foregoing descriptions of the access network device and the terminal device are merely possible examples. For another case in this embodiment of this application, refer to the example. For example, in some possible scenarios (for example, the second port index group causes interference to the first port index group, and another port index group other than the second port index group in the second set causes no interference or small interference to the first port index group), "the port index group in the second set is not allocated to another terminal device" in the foregoing example may be replaced with "the second port index group is not allocated to another terminal device". "The port index group in the second set is allocated to another terminal device" may be replaced with "the second port index group is allocated to another terminal device".

**(2) The association relationship between the first port index group and the second port index group is the second association relationship.**

If the association relationship between the first port index group and the second port index group is the second association relationship, when the first indication information indicates the first port index group, the third indication information may indicate whether a port index group in the second set is allocated to another terminal device on a time-frequency resource allocated to the terminal device; or when the first indication information indicates the second port index group, the third indication information may indicate whether a port index group in the first set is allocated to the another terminal device on the time-frequency resource allocated to the terminal device.

For example, the first indication information indicates the first port index group. In other words, the access network device may send the third indication information to the terminal device provided that any port index group in the second set is allocated to the another terminal device.

It may be understood that when the association relationship between the first port index group and the second port index group is the second association relationship, if the first indication information indicates the first port index group, DMRS port indexes in the first port index group are all existing DMRS port indexes (for example, the first port index group is a port index group shown in Table 3A to Table 6B). In this case, the access network device may send the third indication information to the terminal device, to indicate whether the port index group in the second set is allocated to the another terminal device. For specific implementation, refer to the foregoing descriptions. If the access network device allocates the second port index group to the terminal device, because the DMRS port index in the second port index group includes an existing DMRS port index and a newly added DMRS port index (for example, the second port index group is a port index group shown in Table 14A and Table 14B), in this case, the terminal device may determine, based on the allocated DMRS port index, that impact of an outer cover code needs to be considered during channel estimation, to reduce interference between the newly added DMRS port and the existing DMRS port. Therefore, the access network device may not need to send the third indication information to the terminal device, to reduce signaling overheads.

In addition, S603 is an optional step. In other words, the access network device may not send the third indication information to the terminal device. In this case, the terminal device may perform channel estimation based on a granularity of a frequency domain cover code length of 4 by default.

According to the foregoing method, the access network device may send the third indication information to the terminal device, so that the terminal device can perform channel estimation in a corresponding manner based on the third indication information. For example, the terminal device may not consider despreading of an outer cover code during channel estimation based on the third indication information, so that channel estimation is more conveniently implemented. For another example, the terminal device may consider despreading of an inner cover code and an outer cover code during channel estimation based on the third indication information, to reduce interference between an existing DMRS port and a newly added DMRS port.

The foregoing mainly describes the solutions provided in embodiments of this application from a perspective of interaction between communication apparatuses. It may be understood that, to implement the foregoing functions, an access network device and a terminal device may include corresponding hardware structures and/or software modules for implementing functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the access network device and the terminal device based on the foregoing method example. For example, each functional unit may be obtained through division based on a corresponding function, or two or more functions may be integrated into one unit. The integrated unit may be implemented in a form of hardware, or may be implemented in a form of a software functional unit.

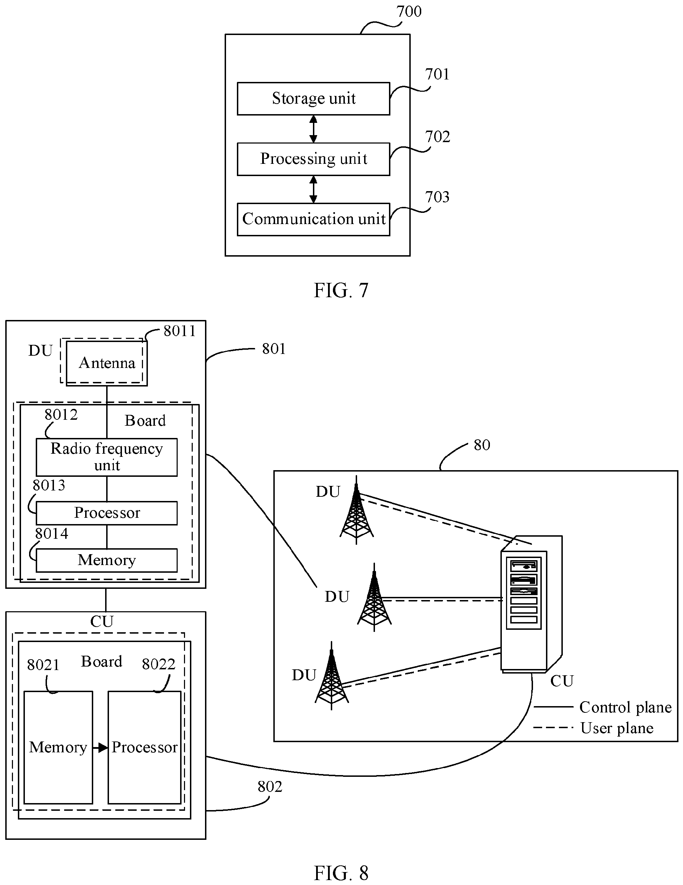

When an integrated unit is used, FIG. 7 is a block diagram of a possible example of an apparatus according to an embodiment of this application. As shown in FIG. 7, an apparatus 700 may include a processing unit 702 and a communication unit 703. The processing unit 702 is configured to control and manage an action of the apparatus 700. The communication unit 703 is configured to support the apparatus 700 in communicating with another device. Optionally, the communication unit 703 is also referred to as a transceiver unit, and may include a receiving unit and/or a sending unit, respectively configured to perform a receiving operation and a sending operation. The apparatus 700 may further include a storage unit 701, configured to store program code and/or data of the apparatus 700.

The apparatus 700 may be the access network device in the foregoing embodiments. The processing unit 702 may support the apparatus 700 in performing actions of the access network device in the foregoing method examples. Alternatively, the processing unit 702 mainly performs an internal action of the access network device in the method examples, and the communication unit 703 may support communication between the apparatus 700 and another device.

For example, in an embodiment, the communication unit 703 is configured to: send first indication information to a terminal device, and send second indication information to the terminal device. When the second indication information indicates a first value, the first indication information indicates a first port index group in a plurality of port index groups included in a first set. When the second indication information indicates a second value, the first indication information indicates a second port index group in a plurality of port index groups included in a second set. The first port index group and the second port index group have an association relationship.

The apparatus 700 may be the terminal device in the foregoing embodiments. The processing unit 702 may support the apparatus 700 in performing actions of the terminal device in the foregoing method examples. Alternatively, the processing unit 702 mainly performs an internal action of the terminal device in the method examples, and the communication unit 703 may support communication between the apparatus 700 and another device.

For example, in an embodiment, the communication unit 703 is configured to: receive first indication information from an access network device, and receive second indication information from the access network device. When the second indication information indicates a first value, the first indication information indicates a first port index group in a plurality of port index groups included in a first set. When the second indication information indicates a second value, the first indication information indicates a second port index group in a plurality of port index groups included in a second set. The first port index group and the second port index group have an association relationship.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

For example, a unit in any one of the foregoing apparatuses may be one or more integrated circuits configured to implement the foregoing method, for example, one or more application specific integrated circuits (application specific integrated circuit, ASIC), one or more microprocessors (digital signal processor, DSP), or one or more field programmable gate arrays (field programmable gate array, FPGA), or a combination of at least two of these integrated circuit forms. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

FIG. 8 is a diagram of a structure of an access network device according to an embodiment of this application. The access network device (or base station) may be used in the communication system shown in FIG. 1, to perform functions of the access network device in the foregoing method embodiments. As shown in FIG. 8, the access network device 80 may include one or more DUs 801 and one or more CUs 802. The DU 801 may include at least one antenna 8011, at least one radio frequency unit 8012, at least one processor 8013, and at least one memory 8014. The DU 801 is mainly configured to receive/send a radio frequency signal, perform conversion between a radio frequency signal and a baseband signal, and perform partial baseband processing. The CU 802 may include at least one processor 8022 and at least one memory 8021.

The CU 802 is mainly configured to: perform baseband processing, control the access network device, and the like. The DU 801 and the CU 802 may be physically arranged together, or may be physically arranged separately, that is, a distributed base station. The CU 802 is a control center of the access network device, may also be referred to as a processing unit, and is mainly configured to complete a baseband processing function. For example, the CU 802 may be configured to control the access network device to perform an operation procedure related to the access network device in the foregoing method embodiments.

In addition, optionally, the access network device 80 may include one or more radio frequency units, one or more DUs, and one or more CUs. The DU may include at least one processor 8013 and at least one memory 8014, the radio frequency unit may include at least one antenna 8011 and at least one radio frequency unit 8012, and the CU may include at least one processor 8022 and at least one memory 8021.

In an example, the CU 802 may include one or more boards. A plurality of boards may jointly support a radio access network (for example, a 5G network) with a single access indication, or may separately support radio access networks (for example, an LTE network, a 5G network, or another network) of different access standards. The memory 8021 and the processor 8022 may serve the one or more boards. In other words, a memory and a processor may be disposed on each board. Alternatively, a plurality of boards may share a same memory and a same processor. In addition, a necessary circuit may further be disposed on each board. The DU 801 may include one or more boards. A plurality of boards may jointly support a radio access network (for example, a 5G network) with a single access indication, or may separately support radio access networks (for example, an LTE network, a 5G network, or another network) of different access standards. The memory 8014 and the processor 8013 may serve the one or more boards. In other words, a memory and a processor may be disposed on each board. Alternatively, a plurality of boards may share a same memory and a same processor. In addition, a necessary circuit may further be disposed on each board.

The access network device shown in FIG. 8 can implement all processes related to the access network device in the foregoing method embodiments. Operations and/or functions of the modules in the access network device shown in FIG. 8 are intended to implement the corresponding procedures in the foregoing method embodiments. For details, refer to the descriptions in the foregoing method embodiments. To avoid repetition, detailed descriptions are properly omitted herein.

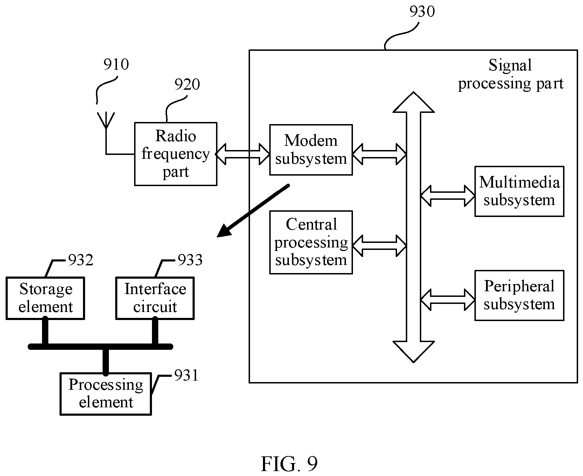

FIG. 9 is a diagram of a structure of a terminal device according to an embodiment of this application. The terminal device may be used in the communication system shown in FIG. 1, to implement operations of the terminal device in the foregoing embodiments. As shown in FIG. 9, the terminal device includes an antenna 910, a radio frequency part 920, and a signal processing part 930. The antenna 910 is connected to the radio frequency part 920. In a downlink direction, the radio frequency part 920 receives, through the antenna 910, information sent by a network device (for example, an access network device), and sends, to the signal processing part 930 for processing, the information sent by the network device. In an uplink direction, the signal processing part 930 processes information of the terminal device, and sends the information to the radio frequency part 920. The radio frequency part 920 processes the information of the terminal device, and then sends the processed information to the network device through the antenna 910.

The signal processing part 930 may include a modem subsystem, configured to process data at each communication protocol layer. The signal processing part 930 may further include a central processing subsystem, configured to process an operating system and an application layer of the terminal device. In addition, the signal processing part 930 may further include another subsystem, for example, a multimedia subsystem or a peripheral subsystem. The multimedia subsystem is configured to control a camera, a screen display, and the like of the terminal device. The peripheral subsystem is configured to connect to another device. The modem subsystem may be a separately disposed chip.

The modem subsystem may include one or more processing elements 931, for example, include one main control CPU and another integrated circuit. In addition, the modem subsystem may further include a storage element 932 and an interface circuit 933. The storage element 932 is configured to store data and a program. However, a program used to perform the methods performed by the terminal device in the foregoing methods may not be stored in the storage element 932, but is stored in a memory outside the modem subsystem, and is loaded by the modem subsystem for use. The interface circuit 933 is configured to communicate with another subsystem.

The modem subsystem may be implemented by using a chip. The chip includes at least one processing element and an interface circuit. The processing element is configured to perform the steps of any method performed by the terminal device. The interface circuit is configured to communicate with another apparatus. In an implementation, units of the terminal device that implement the steps in the foregoing methods may be implemented by a program scheduled by a processing element. For example, the apparatus used for the terminal device includes a processing element and a storage element. The processing element invokes a program stored in the storage element, to perform the method performed by the terminal device in the foregoing method embodiment. The storage element may be a storage element whose processing element is located on a same chip, that is, an on-chip storage element.

In another implementation, the program used to perform the method performed by the terminal device in the foregoing method may be in a storage element located on a different chip from the processing element, that is, an off-chip storage element. In this case, the processing element invokes or loads the program from the off-chip storage element to the on-chip storage element, to invoke and perform the method performed by the terminal device in the foregoing method embodiment.

In still another implementation, units of the terminal device that implement the steps in the foregoing method may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. These integrated circuits may be integrated together to form a chip.

Units of the terminal device that implement the steps in the foregoing method may be integrated together, and implemented in a form of SOC. The SOC chip is configured to implement the foregoing method. At least one processing element and a storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logical circuit in the processor element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit described in FIG. 7. For example, the processing element may be a general-purpose processor, for example, a CPU, or may be one or more integrated circuits configured to implement the foregoing method, for example, one or more ASICs, one or more microprocessors DSPs, or one or more FPGAs, or a combination of at least two of the integrated circuit forms. The storage element may be implemented by using a memory, and a function of the storage element may be the same as a function of the storage unit described in FIG. 7. The storage element may be one memory, or an umbrella term of a plurality of memories.

The terminal device shown in FIG. 9 can implement all processes related to the terminal device in the foregoing method embodiments. Operations and/or functions of the modules in the terminal device shown in FIG. 9 are intended to implement the corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, A and B, A and C, B and C, or A, B, and C. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A communication method, wherein the method comprises:

   sending first indication information to a terminal device; and
   sending second indication information to the terminal device, wherein
   when the second indication information indicates a first value, the first indication information indicates a first port index group in a plurality of port index groups comprised in a first set; or
   when the second indication information indicates a second value, the first indication information indicates a second port index group in a plurality of port index groups comprised in a second set; and
   the first port index group and the second port index group have an association relationship.

2. The method according to claim 1, wherein the association relationship is:
   there is a one-to-one correspondence between port indexes in the first port index group and port indexes in the second port index group.

3. The method according to claim 1 or 2, wherein there is an offset between a port index in the first port index group and a port index in the second port index group.

4. The method according to claim 3, wherein the first set corresponds to a plurality of port indexes, and each of the plurality of port index groups comprised in the first set comprises at least one of the plurality of port indexes; and
   the offset is equal to a quantity of port indexes corresponding to the first set.

5. The method according to claim 3 or 4, wherein a value of the offset is 4, 8, 6, or 12.

6. The method according to claim 1, wherein the association relationship is:
   the first port index group is a subset of the second port index group.

7. The method according to any one of claims 1 to 6, wherein the second indication information is carried in a radio resource control RRC message or downlink control information DCI.

8. The method according to any one of claims 1 to 7, wherein the first indication information indicates a first index value; and
   the first index value is associated with the first port index group and the second port index group.

9. The method according to any one of claims 1 to 8, wherein the first port index group and the second port index group correspond to a same time-frequency resource; and
   the first port index group corresponds to a first cover code sequence, the second port index group corresponds to a second cover code sequence, and the first cover code sequence is orthogonal to the second cover code sequence.

10. The method according to any one of claims 1 to 9, wherein the method further comprises:

    sending third indication information to the terminal device, wherein
    when the first indication information indicates the first port index group, the third indication information indicates whether the second port index group is allocated to another terminal device on a time-frequency resource allocated to the terminal device; or
    when the first indication information indicates the second port index group, the third indication information indicates whether the first port index group is allocated to the another terminal device on the time-frequency resource allocated to the terminal device.

11. A communication method, wherein the method comprises:

    receiving first indication information from an access network device; and
    receiving second indication information from the access network device, wherein
    when the second indication information indicates a first value, the first indication information indicates a first port index group in a plurality of port index groups comprised in a first set; or
    when the second indication information indicates a second value, the first indication information indicates a second port index group in a plurality of port index groups comprised in a second set; and

the first port index group and the second port index group have an association relationship.

12. The method according to claim 11, wherein the association relationship is:
there is a one-to-one correspondence between port indexes in the first port index group and port indexes in the second port index group.

13. The method according to claim 11 or 12, wherein there is an offset between a port index in the first port index group and a port index in the second port index group.

14. The method according to claim 13, wherein the first set corresponds to a plurality of port indexes, and each of the plurality of port index groups comprised in the first set comprises at least one of the plurality of port indexes; and the offset is equal to a quantity of port indexes corresponding to the first set.

15. The method according to claim 13 or 14, wherein a value of the offset is 4, 8, 6, or 12.

16. The method according to claim 11, wherein the association relationship is:
the first port index group is a subset of the second port index group.

17. The method according to any one of claims 11 to 16, wherein the second indication information is carried in an RRC message or DCI.

18. The method according to any one of claims 11 to 17, wherein the first indication information indicates a first index value; and
the first index value is associated with the first port index group and the second port index group.

19. The method according to any one of claims 11 to 18, wherein the first port index group and the second port index group correspond to a same time-frequency resource; and
the first port index group corresponds to a first cover code sequence, the second port index group corresponds to a second cover code sequence, and the first cover code sequence is orthogonal to the second cover code sequence.

20. The method according to any one of claims 11 to 19, wherein the method further comprises:

receiving third indication information from the access network device, wherein
when the first indication information indicates the first port index group, the third indication information indicates whether the second port index group is allocated to another terminal device on a time-frequency resource allocated to the terminal device; or
when the first indication information indicates the second port index group, the third indication information indicates whether the first port index group is allocated to the another terminal device on the time-frequency resource allocated to the terminal device.

21. A communication apparatus, wherein the apparatus comprises:

a communication unit, configured to send first indication information to a terminal device, wherein
the communication unit is further configured to send second indication information to the terminal device;
when the second indication information indicates a first value, the first indication information indicates a first port index group in a plurality of port index groups comprised in a first set; or
when the second indication information indicates a second value, the first indication information indicates a second port index group in a plurality of port index groups comprised in a second set; and
the first port index group and the second port index group have an association relationship.

22. The apparatus according to claim 21, wherein the association relationship is:
there is a one-to-one correspondence between port indexes in the first port index group and port indexes in the second port index group.

23. The apparatus according to claim 21 or 22, wherein there is an offset between a port index in the first port index group and a port index in the second port index group.

24. The apparatus according to claim 23, wherein the first set corresponds to a plurality of port indexes, and each of the plurality of port index groups comprised in the first set comprises at least one of the plurality of port indexes; and the offset is equal to a quantity of port indexes corresponding to the first set.

25. The apparatus according to claim 23 or 24, wherein a value of the offset is 4, 8, 6, or 12.

26. The apparatus according to claim 21, wherein the association relationship is:
the first port index group is a subset of the second port index group.

27. The apparatus according to any one of claims 21 to 26, wherein the second indication information is carried in a radio resource control RRC message or downlink control information DCI.

28. The apparatus according to any one of claims 21 to 27, wherein the first indication information indicates a first index value; and
the first index value is associated with the first port index group and the second port index group.

29. The apparatus according to any one of claims 21 to 28, wherein the first port index group and the second port index group correspond to a same time-frequency resource; and
the first port index group corresponds to a first cover code sequence, the second port index group corresponds to a second cover code sequence, and the first cover code sequence is orthogonal to the second cover code sequence.

30. The apparatus according to any one of claims 21 to 29, wherein the communication unit is further configured to:

send third indication information to the terminal device, wherein
when the first indication information indicates the first port index group, the third indication information indicates whether the second port index group is allocated to another terminal device on a time-frequency resource allocated to the terminal device; or
when the first indication information indicates the second port index group, the third indication information indicates whether the first port index group is allocated to the another terminal device on the time-frequency resource allocated to the terminal device.

31. A communication apparatus, wherein the apparatus comprises:

a communication unit, configured to receive first indication information from an access network device, wherein the communication unit is further configured to receive second indication information from the access network device;
when the second indication information indicates a first value, the first indication information indicates a first port index group in a plurality of port index groups comprised in a first set; or
when the second indication information indicates a second value, the first indication information indicates a second port index group in a plurality of port index groups comprised in a second set; and
the first port index group and the second port index group have an association relationship.

32. The apparatus according to claim 31, wherein the association relationship is:
there is a one-to-one correspondence between port indexes in the first port index group and port indexes in the second port index group.

33. The apparatus according to claim 31 or 32, wherein there is an offset between a port index in the first port index group and a port index in the second port index group.

34. The apparatus according to claim 33, wherein the first set corresponds to a plurality of port indexes, and each of the plurality of port index groups comprised in the first set comprises at least one of the plurality of port indexes; and
the offset is equal to a quantity of port indexes corresponding to the first set.

35. The apparatus according to claim 33 or 34, wherein a value of the offset is 4, 8, 6, or 12.

36. The apparatus according to claim 31, wherein the association relationship is:
the first port index group is a subset of the second port index group.

37. The apparatus according to any one of claims 31 to 36, wherein the second indication information is carried in an RRC message or DCI.

38. The apparatus according to any one of claims 31 to 37, wherein the first indication information indicates a first index value; and
the first index value is associated with the first port index group and the second port index group.

39. The apparatus according to any one of claims 31 to 38, wherein the first port index group and the second port index group correspond to a same time-frequency resource; and
the first port index group corresponds to a first cover code sequence, the second port index group corresponds to a second cover code sequence, and the first cover code sequence is orthogonal to the second cover code sequence.

40. The apparatus according to any one of claims 31 to 39, wherein the communication unit is further configured to:

receive third indication information from the access network device, wherein
when the first indication information indicates the first port index group, the third indication information indicates whether the second port index group is allocated to another terminal device on a time-frequency resource allocated to the terminal device; or
when the first indication information indicates the second port index group, the third indication information indicates whether the first port index group is allocated to the another terminal device on the time-frequency resource allocated to the terminal device.

41. A communication method, wherein the method comprises:

sending first indication information to a terminal device, wherein the first indication information indicates a DMRS configuration type; and
sending second indication information to the terminal device, wherein the second indication information indicates an index value, and the index value is an index value in a port index group comprised in a first set, or the index value is an index value in a port index group comprised in a second set.

42. The method according to claim 41, wherein the first set comprises a first port index group, the second set comprises a second port index group, and the first port index group and the second port index group have an association relationship.

43. The method according to claim 42, wherein there is an offset between a port index in the first port index group and a port index in the second port index group.

44. The method according to claim 43, wherein a value of the offset is 4, 8, 6, or 12.

45. A communication method, wherein the method comprises:

receiving first indication information from an access network device, wherein the first indication information indicates a DMRS configuration type; and
receiving second indication information from the access network device, wherein the second indication information indicates an index value, and the index value is an index value in a port index group comprised in a first set, or the index value is an index value in a port index group comprised in a second set.

46. The method according to claim 45, wherein the first set comprises a first port index group, the second set comprises a second port index group, and the first port index group and the second port index group have an association relationship.

47. The method according to claim 46, wherein there is an offset between a port index in the first port index group and a port index in the second port index group.

48. The method according to claim 47, wherein a value of the offset is 4, 8, 6, or 12.

49. A communication apparatus, wherein the apparatus comprises:

a communication unit, configured to send first indication information to a terminal device, wherein the first indication information indicates a DMRS configuration type, wherein

the communication unit is further configured to send second indication information to the terminal device, wherein the second indication information indicates an index value, and the index value is an index value in a port index group comprised in a first set, or the index value is an index value in a port index group comprised in a second set.

50. The apparatus according to claim 49, wherein the first set comprises a first port index group, the second set comprises a second port index group, and the first port index group and the second port index group have an association relationship.

51. The apparatus according to claim 50, wherein there is an offset between a port index in the first port index group and a port index in the second port index group.

52. The apparatus according to claim 51, wherein a value of the offset is 4, 8, 6, or 12.

53. A communication apparatus, wherein the apparatus comprises:

a communication unit, configured to receive first indication information from an access network device, wherein the first indication information indicates a DMRS configuration type; and

receive second indication information from the access network device, wherein the second indication information indicates an index value, and the index value is an index value in a port index group comprised in a first set, or the index value is an index value in a port index group comprised in a second set.

54. The apparatus according to claim 53, wherein the first set comprises a first port index group, the second set comprises a second port index group, and the first port index group and the second port index group have an association relationship.

55. The apparatus according to claim 54, wherein there is an offset between a port index in the first port index group and a port index in the second port index group.

56. The apparatus according to claim 55, wherein a value of the offset is 4, 8, 6, or 12.

57. A communication apparatus, wherein the communication apparatus comprises a processor and a storage medium, the storage medium stores instructions, and when the instructions are run by the processor, the method according to any one of claims 1 to 10 is implemented, or the method according to any one of claims 11 to 20 is implemented, or the method according to any one of claims 41 to 44 is implemented, or the method according to any one of claims 45 to 48 is implemented.

58. A computer-readable storage medium, wherein the computer-readable storage medium comprises instructions, and when the instructions are run by a processor, the method according to any one of claims 1 to 10 is implemented, or the method according to any one of claims 11 to 20 is implemented, or the method according to any one of claims 41 to 44 is implemented, or the method according to any one of claims 45 to 48 is implemented.

59. A computer program product, wherein the computer program product comprises instructions, and when the instructions are run by a processor, the method according to any one of claims 1 to 10 is implemented, or the method according to any one of claims 11 to 20 is implemented, or the method according to any one of claims 41 to 44 is implemented, or the method according to any one of claims 45 to 48 is implemented.

FIG. 1

| | Single-symbol | Double-symbol | |
|---|---|---|---|
| | ... | ... | ... |
| 11 | 2/3<br>(+/−) | 2/3/6/7<br>(+/−/+/−) | 2/3/6/7<br>(+/−/−/+) |
| 10 | 0/1<br>(+/−) | 0/1/4/5<br>(+/−/+/−) | 0/1/4/5<br>(+/−/−/+) |
| 9 | 2/3<br>(+/+) | 2/3/6/7<br>(+/+/+/+) | 2/3/6/7<br>(+/+/−/−) |
| 8 | 0/1<br>(+/+) | 0/1/4/5<br>(+/+/+/+) | 0/1/4/5<br>(+/+/−/−) |
| 7 | 2/3<br>(+/−) | 2/3/6/7<br>(+/−/+/−) | 2/3/6/7<br>(+/−/−/+) |
| 6 | 0/1<br>(+/−) | 0/1/4/5<br>(+/−/+/−) | 0/1/4/5<br>(+/−/−/+) |
| 5 | 2/3<br>(+/+) | 2/3/6/7<br>(+/+/+/+) | 2/3/6/7<br>(+/+/−/−) |
| 4 | 0/1<br>(+/+) | 0/1/4/5<br>(+/+/+/+) | 0/1/4/5<br>(+/+/−/−) |
| 3 | 2/3<br>(+/−) | 2/3/6/7<br>(+/−/+/−) | 2/3/6/7<br>(+/−/−/+) |
| 2 | 0/1<br>(+/−) | 0/1/4/5<br>(+/−/+/−) | 0/1/4/5<br>(+/−/−/+) |
| 1 | 2/3<br>(+/+) | 2/3/6/7<br>(+/+/+/+) | 2/3/6/7<br>(+/+/−/−) |
| 0 | 0/1<br>(+/+) | 0/1/4/5<br>(+/+/+/+) | 0/1/4/5<br>(+/+/−/−) |
| | Symbol 1 | Symbol 1 | Symbol 2 |

**(a) Configuration type 1**

| | Single-symbol | Double-symbol | |
|---|---|---|---|
| | ... | ... | ... |
| 11 | 4/5<br>(+/−) | 4/5/10/11<br>(+/−/+/−) | 4/5/10/11<br>(+/−/−/+) |
| 10 | 4/5<br>(+/+) | 4/5/10/11<br>(+/+/+/+) | 4/5/10/11<br>(+/+/−/−) |
| 9 | 2/3<br>(+/−) | 2/3/8/9<br>(+/−/+/−) | 2/3/8/9<br>(+/−/−/+) |
| 8 | 2/3<br>(+/+) | 2/3/8/9<br>(+/+/+/+) | 2/3/8/9<br>(+/+/−/−) |
| 7 | 0/1<br>(+/−) | 0/1/6/7<br>(+/−/+/−) | 0/1/6/7<br>(+/−/−/+) |
| 6 | 0/1<br>(+/+) | 0/1/6/7<br>(+/+/+/+) | 0/1/6/7<br>(+/+/−/−) |
| 5 | 4/5<br>(+/−) | 4/5/10/11<br>(+/−/+/−) | 4/5/10/11<br>(+/−/−/+) |
| 4 | 4/5<br>(+/+) | 4/5/10/11<br>(+/+/+/+) | 4/5/10/11<br>(+/+/−/−) |
| 3 | 2/3<br>(+/−) | 2/3/8/9<br>(+/−/+/−) | 2/3/8/9<br>(+/−/−/+) |
| 2 | 2/3<br>(+/+) | 2/3/8/9<br>(+/+/+/+) | 2/3/8/9<br>(+/+/−/−) |
| 1 | 0/1<br>(+/−) | 0/1/6/7<br>(+/−/+/−) | 0/1/6/7<br>(+/−/−/+) |
| 0 | 0/1<br>(+/+) | 0/1/6/7<br>(+/+/+/+) | 0/1/6/7<br>(+/+/−/−) |
| | Symbol 1 | Symbol 1 | Symbol 2 |

**(b) Configuration type 2**

FIG. 2

```
┌──────────┐                                              ┌──────────────┐
│ Terminal │                                              │    Access    │
│  device  │                                              │network device│
└────┬─────┘                                              └──────┬───────┘
     │     S301: Indication information 1 (indicating a          │
     │      configuration type 1 or a configuration type 2)      │
     │◄─────────────────────────────────────────────────────────┤
     │     S302: Indication information 2 (indicating that a     │
     │   maximum symbol length occupied by a DMRS port is        │
     │                      1 or 2)                              │
     │◄─────────────────────────────────────────────────────────┤
     │     S303: Indication information 3 (indicating an         │
     │                    index value)                           │
     │◄─────────────────────────────────────────────────────────┤
┌────┴──────────────────────────────────────────────────┐       │
│  S304: Determine, based on a configuration type        │       │
│   indicated by the indication information 1, the       │       │
│  maximum symbol length that is occupied by the         │       │
│ DMRS port and that is indicated by the indication      │       │
│ information 2, and the index value indicated by the    │       │
│ indication information 3, a DMRS port allocated by     │       │
│  the access network device to the terminal device     │       │
└────┬───────────────────────────────────────────────────┘       │
     │                                                            │
```

FIG. 3

EP 4 518 220 A1

| Subcarrier 11 | | | | |
|---|---|---|---|---|
| Subcarrier 10 | +1 | $w_3$ | $w_4$ | 0, 1, 4, 5 |
| Subcarrier 9 | | | | |
| Subcarrier 8 | +1 | $w_1$ | $w_2$ | 0, 1, 4, 5 |
| Subcarrier 7 | | | | |
| Subcarrier 6 | +1 | $w_3$ | $w_4$ | 0, 1, 4, 5 |
| Subcarrier 5 | | | | |
| Subcarrier 4 | +1 | $w_1$ | $w_2$ | 0, 1, 4, 5 |
| Subcarrier 3 | | | | |
| Subcarrier 2 | +1 | $w_3$ | $w_4$ | 0, 1, 4, 5 |
| Subcarrier 1 | | | | |
| Subcarrier 0 | +1 | $w_1$ | $w_2$ | 0, 1, 4, 5 |

Outer cover code sequence — Inner cover code sequence

(1)

| | +1 | $c_3$ | $c_4$ | 8, 9, 12, 13 |
|---|---|---|---|---|
| | +1 | $c_1$ | $c_2$ | 8, 9, 12, 13 |
| | -1 | $c_3$ | $c_4$ | 8, 9, 12, 13 |
| | -1 | $c_1$ | $c_2$ | 8, 9, 12, 13 |
| | +1 | $c_3$ | $c_4$ | 8, 9, 12, 13 |
| | +1 | $c_1$ | $c_2$ | 8, 9, 12, 13 |

Outer cover code sequence — Inner cover code sequence

(2)

FIG. 4

Subcarrier 11

Subcarrier 10

Subcarrier 9

Subcarrier 8

Subcarrier 7 $\quad$ +1 $\quad$ $w_3$ $\quad$ $w_4$ $\quad$ 0, 1, 6, 7 $\qquad$ −1 $\quad$ $c_3$ $\quad$ $c_4$ $\quad$ 12, 13, 18, 19

Subcarrier 6 $\quad$ +1 $\quad$ $w_1$ $\quad$ $w_2$ $\quad$ 0, 1, 6, 7 $\qquad$ −1 $\quad$ $c_1$ $\quad$ $c_2$ $\quad$ 12, 13, 18, 19

Subcarrier 5

Subcarrier 4

Subcarrier 3

Subcarrier 2

Subcarrier 1 $\quad$ +1 $\quad$ $w_3$ $\quad$ $w_4$ $\quad$ 0, 1, 6, 7 $\qquad$ +1 $\quad$ $c_3$ $\quad$ $c_4$ $\quad$ 12, 13, 18, 19

Subcarrier 0 $\quad$ +1 $\quad$ $w_1$ $\quad$ $w_2$ $\quad$ 0, 1, 6, 7 $\qquad$ +1 $\quad$ $c_1$ $\quad$ $c_2$ $\quad$ 12, 13, 18, 19

Outer cover code sequence $\quad$ Inner cover code sequence $\qquad$ Outer cover code sequence $\quad$ Inner cover code sequence

(1) $\qquad\qquad\qquad$ (2)

FIG. 5

Terminal device $\qquad\qquad$ Access network device

S601: First indication information

S602: Second indication information, indicating a first value or a second value

S603: Third indication information

FIG. 6

FIG. 7

FIG. 8

FIG. 9

## INTERNATIONAL SEARCH REPORT

| International application No. |
|---|
| **PCT/CN2023/088620** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT; CNKI; ENTXTC; DWPI; IEEE; 3GPP: 指示, 配置, 类型, 端口, 索引, 值, 第一, 第二, DMRS, indicat+, configuration, type, port, index, value, first, second

**C. DOCUMENTS CONSIDERED TO BE RELEVANT**

| Category* | Citation of document, with indication, where appropriate, of the relevant passages | Relevant to claim No. |
|---|---|---|
| X | WO 2021090604 A1 (SHARP KABUSHIKI KAISHA) 14 May 2021 (2021-05-14) description, paragraphs [0043]-[0048], [0134]-[0136], and [0186]-[0216] | 1-59 |
| X | CN 111769918 A (HUAWEI TECHNOLOGIES CO., LTD.) 13 October 2020 (2020-10-13) description, paragraphs [0096]-[0211] | 1-59 |
| A | CN 112236966 A (GUANGDONG OPPO MOBILE TELECOMMUNICATIONS CORP., LTD.) 15 January 2021 (2021-01-15) entire document | 1-59 |
| A | CN 113225168 A (VIVO COMMUNICATION TECHNOLOGY CO., LTD.) 06 August 2021 (2021-08-06) entire document | 1-59 |
| A | US 2018278312 A1 (TELEFONAKTIEBOLAGET LM ERICSSON (PUBL)) 27 September 2018 (2018-09-27) entire document | 1-59 |
| A | LG ELECTRONICS. "Discussion on DMRS Port Indication for NCJT" *3GPP TSG RAN WG1 #96bis R1-1904214*, 12 April 2019 (2019-04-12), entire document | 1-59 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 July 2023** | **20 July 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/088620**

| Patent document cited in search report | | | Publication date (day/month/year) | Patent family member(s) | | | Publication date (day/month/year) |
|---|---|---|---|---|---|---|---|
| WO | 2021090604 | A1 | 14 May 2021 | US | 2023007680 | A1 | 05 January 2023 |
| | | | | CN | 114616783 | A | 10 June 2022 |
| CN | 111769918 | A | 13 October 2020 | WO | 2020200114 | A1 | 08 October 2020 |
| CN | 112236966 | A | 15 January 2021 | WO | 2020220330 | A1 | 05 November 2020 |
| CN | 113225168 | A | 06 August 2021 | | None | | |
| US | 2018278312 | A1 | 27 September 2018 | WO | 2017048178 | A1 | 23 March 2017 |
| | | | | EP | 3350941 | A1 | 25 July 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210435803